(19) Europäisches Patentamt

European Patent Office

Office européen des brevets

(11) **EP 2 385 641 B1**

(12) **EUROPEAN PATENT SPECIFICATION**

(45) Date of publication and mention
of the grant of the patent:
**03.04.2013 Bulletin 2013/14**

(51) Int Cl.:
***H04J 3/06*** (2006.01)

(21) Application number: **11006429.2**

(22) Date of filing: **22.09.2009**

(54) **A method for clock synchronization in a communication network**

Verfahren zur Taktsynchronisierung in einem Kommunikationsnetzwerk

Procédé pour synchronisation d'horloge dans un réseau de communications

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**09.11.2011 Bulletin 2011/45**

(62) Document number(s) of the earlier application(s) in
accordance with Art. 76 EPC:
**09012028.8 / 2 299 613**

(73) Proprietor: **Siemens Aktiengesellschaft
80333 München (DE)**

(72) Inventors:
 • **Na, Chongning
  100107 Chaoyang District
  Beijing (CN)**
 • **Obradovic, Dragan
  85521 Ottobrunn (DE)**
 • **Scheiterer, Ruxandra
  82538 Geretsried (DE)**

(56) References cited:
 • **CHONGNING NA ET AL: "Probabilistic model for clock synchronization of cascaded network elements", INTRUMENTATION AND MEASUREMENT TECHNOLOGY CONFERENCE, 2009. I2MTC '09. IEEE, IEEE, PISCATAWAY, NJ, USA, 5 May 2009 (2009-05-05), pages 1594-1598, XP031492895, ISBN: 978-1-4244-3352-0**
 • **FRANK R KSCHISCHANG ET AL: "Factor Graphs and the Sum-Product Algorithm", IEEE TRANSACTIONS ON INFORMATION THEORY, IEEE, US, vol. 47, no. 2, 1 February 2001 (2001-02-01), XP011027872, ISSN: 0018-9448**
 • **KSCHISCHANG F R ET AL: "A Factor Graph Approach to Link Loss Monitoring in Wireless Sensor Networks", IEEE JOURNAL ON SELECTED AREAS IN COMMUNICATIONS, IEEE SERVICE CENTER, PISCATAWAY, US, vol. 23, no. 4, 1 April 2005 (2005-04-01), pages 820-829, XP011129425, ISSN: 0733-8716**

**Description**

The invention refers to a method for clock synchronization in a communication network as well as to a corresponding communication network.

In many technical fields, communication networks are used in order to control automatically executed processes. Particularly in industrial automation networks, it is very important that the automatic processes are exactly synchronized with each other. To do so, the nodes in the communication network comprise corresponding clocks which are synchronized with a master clock of a so-called master node. The nodes having the clocks being synchronized with the master clock are usually designated as slave nodes.

A known protocol for performing clock synchronization is the precision time protocol specified in the standard IEEE 1588. The synchronization of this protocol is based on exchanging appropriate time information by the use of synchronization messages where the time information is generated by time stamping according to the local clocks in the corresponding nodes. The synchronization messages are sequentially transmitted from one node to another node, i.e. starting from the master node to the slave node and from the slave node to the next slave node and so on until each slave node in the network has received a synchronization message. The first synchronization message sent by the master node contains a time stamp of a master counter value based on the master clock when the message is transmitted. The following slave nodes process this information and send it further. Based on the processing of a slave, all the estimated delays between the transmission time of the previous node and its own current transmission is added to the content of the synchronization message received by the slave node. Based on the information in the synchronization messages, each slave node can synchronize the slave counter values of its slave clock with the master counter values as indicated in the received synchronization messages.

The document Chongning Na et. al.: "Probabilistic Model For Clock Synchronization Of Cascaded Network Elements", I2MTC 2009, discloses a probabilistic model for clock synchronization using a probabilistic state-space model and an estimation method based on a Kalman-filter to estimate a master counter value.

The document Frank R. Kschischang: "Factor Graphs and the Sum-Product Algorithm", IEEE Transactions on information theory, Vol. 47, No. 2, February 2001, describes a sum-product algorithm, which is a generic message-passing algorithm that operates in a factor graph.

One problem in prior art synchronization methods originates from the uncertainties introduced in the time measurements, e.g. due to jitters in the time stamping, quantization errors as well as random frequency drifts of the clock frequencies. To reduce those uncertainties, it is suggested to average the results from several observations in one node. However, this is not the optimal solution because there still remains a considerable measurement error which is not acceptable for certain applications, particularly in the industrial automation domain.

Therefore, it is an object of the invention to enable clock synchronization in a communication network with higher precision than in prior art implementations.

This object is solved by the independent claims. Preferred embodiments of the invention are defined in the dependent claims.

The method of the invention is performed in a communication network comprising a plurality of nodes, wherein the nodes comprise a master node and slave nodes, wherein the master node has a master clock generating master counter values based on a master counter with a master frequency and wherein each slave node has a slave clock generating slave counter values based on a slave counter with the corresponding slave frequency.

According to the method of the invention, clock synchronization is performed in successive synchronization cycles. In one synchronization cycle, synchronization messages are transmitted in a sequence of synchronization messages from the master node to a slave node and from one slave node to another slave node, wherein a synchronization message sent from one node to another node includes information based on one or more measured counter values (i.e. master or slave counter values) of the node sending the synchronization message.

In order to obtain a precise estimation of the master counter value in each slave node, the master counter value for a measured slave counter value is estimated based on measured counter values by using a state estimation method applied to a probabilistic model for state variables of the nodes. After having estimated the master counter value, this value is used for synchronizing the corresponding slave clock.

The probabilistic model includes a state transition model as well as an observation model. The state transmission model describes the dependency of state variables of slave nodes in a synchronization cycle on state variables of slave nodes in the previous synchronization cycle. The observation model describes the dependency of known variables of master and slave nodes on state variables of slave nodes, particularly at the time of receiving a synchronization message. Here and in the following, the term "known variables" refer to variables which are measured or determined with a certain accuracy in a separate process. By using these models, the state variables of the slave nodes are estimated by the estimation method.

The estimation method is based on the so-called sum-product algorithm which is per se known from the prior art. This sum-product algorithm is applied to a factor graph describing the relationships between known variables and the state variables based on message flows.

The invention is based on the finding that an appropriate probabilistic representation for modelling the behaviours of the nodes can be defined, thus enabling a good estimation of the master counter value used for synchronization. The inventors performed simulations and could show that the synchronization error is very low when the method of the invention is used for clock synchronization.

In a preferred embodiment of the invention, a synchronization message sent from the master node includes the measured master counter value when the synchronization message is sent from the master node. The content of the other synchronization messages sent from one slave node to another slave node depend on the type of estimation method used according to the invention. In one embodiment of the invention, a synchronization message sent from a slave node includes an approximate master counter value when the synchronization message is sent from the slave node, said approximate master counter value being derived from measured slave counter values of the slave node and from information received in synchronization messages. This form of synchronization message is preferably used in case that the Kalman filter mentioned below is used as the estimation method.

In another embodiment of the invention, a synchronization message sent from a slave node includes the measured bridge delay between receiving the previous synchronization message and sending the synchronization message as well as the estimated master counter value for this slave node. This kind of synchronization message is preferably used when the estimation method is based on the sum-product algorithm described below.

In a preferred embodiment of the invention, the probabilistic model incorporates measurement errors with respect to measured counter values as well as variations of the frequency ratio between the master clock and each slave clock.

In a preferred embodiment of the aforementioned probabilistic model including a state transition model and an observation model, the state variables comprise the master counter value and the frequency ratio between the master frequency and a slave frequency when the synchronization message is received in a slave clock. Preferably, the state transition model is defined as follows:

$$R_n(k) = R_n(k-1) + \omega_n(k)$$

$$x_n^{\mathrm{in}}(k) = x_n^{\mathrm{in}}(k-1) + a_n(k) \cdot R_n(k-1) \,,$$

where n refers to the nth slave node receiving a synchronization message in the sequence of synchronization messages; where k refers to the kth synchronization cycle;

where $x_n^{\mathrm{in}}(k)$ refers to the master counter value at the time of receiving the synchronization message in the nth slave node in the kth synchronization cycle;

where $R_n(k)$ is the frequency ratio between the master frequency and the slave frequency of the nth slave node in the kth synchronization cycle;

where $\omega_n(k)$ refers to a random variable modelling frequency variations, where the random variable is preferably modelled as a Gaussian distribution;

where $a_n(k)$ is the time interval measured in slave counter values between receiving the synchronization message in the nth slave node in the kth synchronization cycle and receiving the corresponding synchronization message in the nth slave node in the (k-1)th synchronization cycle.

In another preferred embodiment of the invention, the known state variables used in the observation model comprise a separately estimated line delay (i.e. a line delay being determined with a certain accuracy in a separate line estimation process) in slave counter values between receiving successive synchronization messages in a slave node, a measured bridge delay in slave counter values between receiving a synchronization message and sending the next synchronization message in a slave node and the measured master counter value when the master node sends a synchronization message. Preferably, the observation model is defined as follows:

$$TS(M(k)) = x_1^{\mathrm{in}}(k) - c_1(k) \cdot R_1(k) + v_1(k)$$

$$x_{n-1}^{in}(k) + b_{n-1}(k) \cdot R_{n-1}(k) = x_n^{in}(k) - c_n(k) \cdot R_n(k) + v_n(k) \qquad \text{for } n > 1$$

where n refers to the nth slave node receiving a synchronization message in the sequence of synchronization messages;
where k refers to the kth synchronization cycle;
where $TS(M(k))$ refers to the measured master counter value when the master node sends the synchronization message in the kth synchronization cycle;

where $x_n^{in}(k)$ refers to the master counter value at the time of receiving the synchronization message in the nth slave node in the kth synchronization cycle;
where $R_n(k)$ is the frequency ratio between the master frequency and the slave frequency of the nth slave node in the kth synchronization cycle;
where $c_n(k)$ refers to the separately estimated line delay in slave counter values between receiving successive synchronization messages in the nth slave node in the kth synchronization cycle;
where $b_n(k)$ refers to the measured bridge delay in slave counter values between receiving the synchronization message and sending the next synchronization message in the nth slave node in the kth synchronization cycle;
where $v_n(k)$ refers to a random variable modelling measurement errors in the nth slave node, said random variable preferably being modelled by a Gaussian distribution, said distribution preferably being generated from test sample data.

The above described formulas for the state transition model and the observation model have been obtained by a complex mathematic derivation explained in detail in the detailed description.

In another embodiment of the invention, particularly in the embodiment using the sum-product algorithm described below, the state variables of a slave node are estimated in the slave node.

In a particularly preferred embodiment, the factor graph has constraints with respect to the message flows such that messages are not passed from a node receiving a synchronization message to a node from which the synchronization message is received and such that messages are not passed back in time. This enables an implementation of the method according to the invention where state variables are estimated directly in each node.

The clock synchronization used according to the invention is preferably based on the above mentioned standard IEEE 1588 describing the exchange of synchronization messages. In another embodiment of the invention, the nodes in the communication network communicate with each other based on the well-known PROFINET standard. Furthermore, the method according to the invention is preferably used in a communication network in an industrial automation system.

Besides the above method, the invention also refers to a communication network comprising a plurality of nodes where the nodes are adapted to perform a clock synchronization based on the synchronization method of the invention.

Embodiments of the invention will now be described in detail with respect to the accompanying drawings, wherein:

Fig. 1    shows a schematic view on several network nodes exchanging synchronization messages according to an embodiment of the invention;

Fig. 2    shows a diagram indicating the propagation of synchronization messages in an embodiment according to the invention;

Fig. 3    shows a diagram with respect to an estimation method using a fusion center for estimating state variables;

Fig. 4 and 5A to 5B    show factor graphs used by the sum-product algorithm according to an embodiment of the invention; and

Fig. 6    shows a diagram indicating the information carried by the synchronization messages according to an embodiment of the invention.

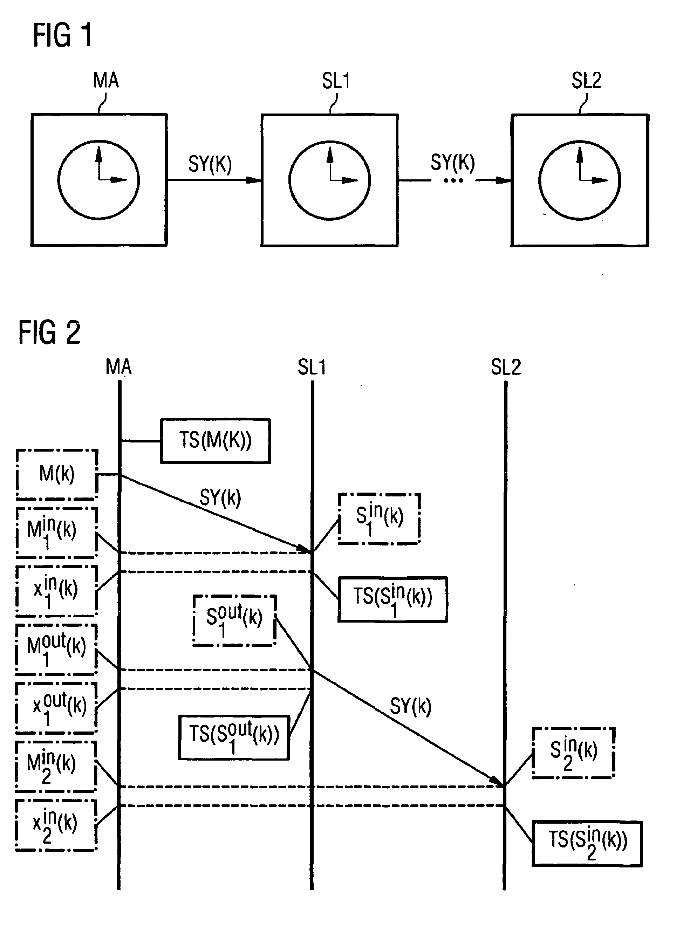

Fig. 1 shows a chain of nodes in a communication network performing the method of the invention. The communication network comprises a master node MA as well as several slave nodes, where in Fig. 1 slave nodes SL1 and SL2 are shown. The master node has a master clock and each slave node has a slave clock. In the communication network according to Fig. 1, an appropriate clock synchronization protocol, e.g. the precision time protocol according to the standard IEEE 1588, is used for synchronizing the clock of each slave node with the clock of the master node MA. To do so, synchronization messages SY(k) are forwarded from one node to another, i.e. from the master node MA to the slave node SL1, from the slave node SL1 to the slave node SL2 and so on until the last slave node SLN in the chain of slave nodes is reached. The transmission of synchronization messages is repeated in successive synchronization cycles, where k indicates the current number of the synchronization cycle. In order to perform synchronization, the messages SY(k) include time stamps indicating the master counter value of the master clock at the time of sending the synchronization message. I.e., the master counter value in a message is updated in each slave node by adding to the time of the master clock of a received synchronization message the time interval from receiving the synchronization message until sending the next synchronization message. The time interval being added is subject to measurement errors which is evident from the diagram of Fig. 2.

In Fig. 2, the three vertical lines refer to the time being measured in the master node MA, the slave node SL1 and the slave node SL2, respectively. The time axis according to those vertical lines extends from above to below, i.e. future events are at lower positions along the vertical lines. The clock of the master node MA works at a master frequency and the clocks of the slave nodes SL1 and SL2 work at respective slave frequencies which can be different from each other and from the master frequency. The time for each node is measured in the corresponding clock of the node, i.e. with the corresponding frequency of the clock of the respective node.

In the diagram of Fig. 2, the function TS refers to the corresponding time stamp of a counter and indicates the measured value of the counter. Due to stamping jitters and frequency drifts, the time stamp differs from the true counter value. Fig. 2 shows the transmission of the synchronization message SY(k) which is sent by the master node MA at the true master counter value M(k) corresponding to the measured master counter value TS(M(k)). This message is received in slave node SL1 at the slave counter value $S_1^{in}(k)$ which corresponds to the measured slave counter value $TS\left(S_1^{in}(k)\right)$. The time between sending the message from the master node MA and receiving the message in the slave node SL1 is called line delay and is estimated by a corresponding estimation process. Particularly, in the standard IEEE 1588 such an estimation process is described and may also be used in the method according to the invention. Upon receipt of the synchronization message and an additional bridge delay, a new synchronization message is sent from slave node SL1 to slave node SL2. The new message is sent at the slave counter value $S_1^{out}(k)$ corresponding to a measured slave counter value $TS\left(S_1^{out}(k)\right)$.

The synchronization message sent from the slave node SL1 to the slave node SL2 is received in the slave node SL2 at the true slave counter value $S_2^{in}(k)$ corresponding to the measured slave counter value $TS\left(S_2^{in}(k)\right)$. Thereafter, the method repeats and a new synchronization message SY(k) will be sent to the next slave node and so on until all N slave nodes in the network have received a synchronization message. As is evident from Fig. 2, the measured slave counter values (i.e. the time stamps TS of the slave counter values) have corresponding master counter values indicated by time variables beginning with the letter "x" on the first vertical line. Analogously, the true slave counter values have corresponding master counter values indicated by time variables beginning with the letter "M" on the first vertical line.

One problem arising in synchronization are the uncertainties introduced due to measurement errors, like stamping jitter, quantization errors and random frequency drifts between the clocks of the slave nodes and the master clock. Due to these errors, the synchronization of the clocks is not exact which may result in problems in some applications where combined processes needing an exact matching of the clocks are performed by the nodes in the network. Particularly, in applications referring to industrial automation processes, an exact synchronization of the clocks between the nodes is very important.

According to the invention, a probabilistic model representing the relationships between state variables of the different nodes is introduced. This model provides a good estimation of the counter values in the respective nodes such that a better synchronization of the slave clocks with respect to the master clock can be established. In the following, an appropriate probabilistic model will be derived. Thereafter, this probabilistic model will be used by an estimation method for estimating the states of the nodes, which is based on the sum-product algorithm.

At first, the variables appearing in Fig. 2 for the general case of a slave node SLn (n = 1, ..., N) will be explained. In the terminology used in the following, a synchronization message will also be called Sync message and a slave node SLn will also be designated as slave n. Furthermore, the term "master" is used for indicating the master node MA.

TS(x): time-stamp of counter with value x.

$\xi$ (x): stamping error, i.e.,

$$TS(x) = x + \xi(x) \qquad (1)$$

$R_n(k)$: the $k^{th}$ RCF, i.e. frequency ratio of master frequency and slave n's frequency.

$M(k)$: master counter value when the $k^{th}$ Sync message is transmitted by the master (which is stamped as, i.e. believed to be TS(M(k))).

$S_n^{in}(k)$ : : counter value of slave n when the $k^{th}$ Sync message arrives at slave n (which is stamped as, i.e. believed to be $TS\big(S_n^{in}(k)\big)$) . $M_n^{in}(k)$:

: master counter value at this time, i.e. for slave n's counter value $S_n^{in}(k)$. $x_n^{in}(k)$:

: master counter at the time when slave n's counter really is $TS\big(S_n^{in}(k)\big)$.

$S_n^{out}(k)$ : counter value of slave n when the $k^{th}$ Sync message is forwarded by slave n (which is stamped as, i.e. believed to be $TS\big(S_n^{out}(k)\big)$) .

$M_n^{out}(k)$: master counter value at this time, i.e. for slave n's counter value $S_n^{out}(k)$.

$x_n^{out}(k)$ : : master counter at the time when slave n's counter really is $TS\big(S_n^{out}(k)\big)$.

$M(LD_n)$: the line delay between slave **n-1** and slave n (for n = 1 between master and slave 1), measured by the master clock.

$S_n(LD_n)$: the line delay between slave **n-1** and slave n (for n = 1 between master and slave 1), measured by slave n's clock. $\hat{S}_n(LD_n)$ : estimate of the line delay between slave **n-1** and slave n (for n = 1 between master and slave 1), measured by slave n's clock.

$\eta(\hat{S}_n(LD_n))$: estimation error of $\hat{S}_n(LD_n)$, i.e.

$$\hat{S}_n(LD_n) = S_n(LD_n) + \eta(\hat{S}_n(LD_n)) .$$

In the following, an appropriate state transition model and observation model will be derived. As mentioned above, those models are used by two embodiments of the invention described later on for estimating the master counter in each slave.

The state transition model of RCF is given by:

$$R_n(k) = R_n(k-1) + \omega_n(k) \quad (2)$$

where $\omega_n(k)$ is the process noise of RCF. If the frequency drifts, the performance is sensitive to the choice of $\omega_n(k)$. However, the following derivation is focussed on reducing the influence of stamping noise in the case of constant frequency.

The state transition of $x_k^{in}(k)$ is given by:

$$x_n^{in}(k) = x_n^{in}(k-1) + \Big(TS(S_n^{in}(k)) - TS(S_n^{in}(k-1))\Big) \cdot R_n(k-1) \quad (3)$$

Using $a_n(k)$ to denote $TS\big(S_n^{in}(k)\big) - TS\big(S_n^{in}(k-1)\big)$, then (3) can be written as:

$$x_n^{\text{in}}(k) = x_n^{\text{in}}(k-1) + a_n(k) \cdot R_n(k-1) \qquad (4)$$

$x_k^{in}(k)$ and $x_k^{out}(k)$ are related by:

$$x_n^{\text{out}}(k) = x_n^{\text{in}}(k) + \left(TS(S_n^{\text{out}}(k)) - TS(S_n^{\text{in}}(k))\right) \cdot R_n(k) \qquad (5)$$

Using $b_n(k)$ to denote $TS\left(S_n^{out}(k)\right) - TS\left(S_n^{in}(k)\right)$ and rewrite (5) :

$$x_n^{\text{out}}(k) = x_n^{\text{in}}(k) + b_n(k) \cdot R_n(k) \qquad (6)$$

$M(k)$ and $M_1^{in}(k)$ are related by the line delay between master and slave 1:

$$M(k) = M_1^{\text{in}}(k) - M(LD_1)$$
$$= M_1^{\text{in}}(k) - S_1(LD_1) \cdot R_1(k)$$
$$= M_1^{\text{in}}(k) - \left(\hat{S}_1(LD_1) - \eta(\hat{S}_1(LD_1))\right) \cdot R_1(k) \qquad (7)$$

For n>1, $M_{n-1}^{out}(k)$ and $M_1^{in}(k)$ are related by:

$$M_{n-1}^{\text{out}}(k) = M_n^{\text{in}}(k) - M(LD_n) = M_n^{\text{in}}(k) - S_n(LD_n) \cdot R_n(k)$$
$$= M_n^{\text{in}}(k) - \left(\hat{S}_n(LD_n) - \eta(\hat{S}_n(LD_n))\right) \cdot R_n(k) \qquad (8)$$

For all $TT \in \{\text{in, out}\}$ the following relation holds by definition of $R_n(k)$ :

$$x_n^{\text{TT}}(k) - M_n^{\text{TT}}(k) = R_n(k) \cdot \left(TS(S_n^{\text{TT}}(k)) - S_n^{\text{TT}}(k)\right) = R_n(k) \cdot \xi\left(S_n^{\text{TT}}(k)\right) \qquad (9)$$

For deriving this relation, equation (1) with argument $S_n^{\text{TT}}(k)$ is inserted in the second equality of (9).

Applying equation (1) with argument $M(k)$ on the left hand side of equation (7) and applying equation (9) on the 1st term of the right hand side of equation (7), this equation can be rewritten as:

$$TS(M(k)) - \xi(M(k)) = \left(x_1^{in}(k) - R_1(k) \cdot \xi(S_1^{in}(k))\right) - \left(\hat{S}_1(LD_1) - \eta(\hat{S}_1(LD_1))\right) \cdot R_1(k) \quad (10)$$
$$\Rightarrow \quad TS(M(k)) = x_1^{in}(k) - \hat{S}_1(LD_1) \cdot R_1(k) + \eta(\hat{S}_1(LD_1)) \cdot R_1(k) + \xi(M(k)) - R_1(k) \cdot \xi(S_1^{in}(k))$$

Using equation (9) on the left hand side and on the 1st term of the right hand side of equation (8), this equation can be rewritten as:

$$x_{n-1}^{out}(k) - R_{n-1}(k) \cdot \xi(S_{n-1}^{out}(k)) = \left(x_n^{in}(k) - R_n(k) \cdot \xi(S_n^{in}(k))\right) - \hat{S}_n(LD_n) \cdot R_n(k) + \eta(\hat{S}_n(LD_n)) \cdot R_n(k) \quad (11)$$
$$\Rightarrow \quad x_{n-1}^{out}(k) = x_n^{in}(k) - \hat{S}_n(LD_n) \cdot R_n(k) + \eta(\hat{S}_n(LD_n)) \cdot R_n(k) + R_{n-1}(k) \cdot \xi(S_{n-1}^{out}(k)) - R_n(k) \cdot \xi(S_n^{in}(k))$$

Using equation (6), equation (11) can be rewritten as:

$$x_{n-1}^{in}(k) + b_{n-1}(k) \cdot R_{n-1}(k) = x_n^{in}(k) - \hat{S}_n(LD_n) \cdot R_n(k) +$$
$$+ \eta(\hat{S}_n(LD_n)) \cdot R_n(k) + R_{n-1}(k) \cdot \xi(S_{n-1}^{out}(k)) - R_n(k) \cdot \xi(S_n^{in}(k)) \quad (12)$$

By defining:

$$v_n(k) = \begin{cases} \eta(\hat{S}_1(LD_1)) \cdot R_1(k) + \xi(M(k)) - R_1(k) \cdot \xi(S_1^{in}(k)) & n = 1 \\ \eta(\hat{S}_n(LD_n)) \cdot R_n(k) + R_{n-1}(k) \cdot \xi(S_{n-1}^{out}(k)) - R_n(k) \cdot \xi(S_n^{in}(k)) & n > 1 \end{cases} \quad (13)$$

and $c_n(k) = \hat{S}(LD_n)$
equations (10) and (12) can be rewritten as follows:

$$\boxed{TS(M(k)) = x_1^{in}(k) - c_1(k) \cdot R_1(k) + v_1(k)} \quad (14)$$

$$\boxed{x_{n-1}^{in}(k) + b_{n-1}(k) \cdot R_{n-1}(k) = x_n^{in}(k) - c_n(k) \cdot R_n(k) + v_n(k) \qquad (\text{for } n > 1)} \quad (15)$$

The most important formulas that have been derived are as follows:

$$(2): \qquad R_n(k) = R_n(k-1) + \omega_n(k)$$

$$(4): \qquad x_n^{in}(k) = x_n^{in}(k-1) + a_n(k) \cdot R_n(k-1)$$

$$(14): \qquad TS(M(k)) = x_1^{in}(k) - c_1(k) \cdot R_1(k) + v_1(k)$$

$$(15): \quad x^{\text{in}}_{n-1}(k) + b_{n-1}(k) \cdot R_{n-1}(k) = x^{\text{in}}_n(k) - c_n(k) \cdot R_n(k) + v_n(k) \qquad \text{for } n > 1$$

The variables above fall into the following categories: $TS(M(k))$, $a_n(k)$, ($n = 1,...N$), $c_n(k)$,($n=1,...N$) and $b_{n-1}(k)$, ($n=2,...N$) are known variables ( i.e. variables which are measured or determined with a certain accuracy in a separate process), $x^{\text{in}}_n(k)$ and $R_n(k)$ are hidden state variables which need to be estimated, and $v_n(k)$, $\omega_n(k)$ are random variables.

The first two formulas (2) and (4) reveal the time correlation of the state variables, so they constitute the state transition model. The other two formulae (14) and (15) reveal the space correlation of the state variables; hence they are the observation or coupling model. These four equations represent the state-space-model of the system.

The above derived state transition model and observation model will be used in both embodiments described in the following for estimating the state variables $x^{\text{in}}_n(k)$ and $R_n(k)$ (also denoted as hidden state variables) used for clock synchronization.

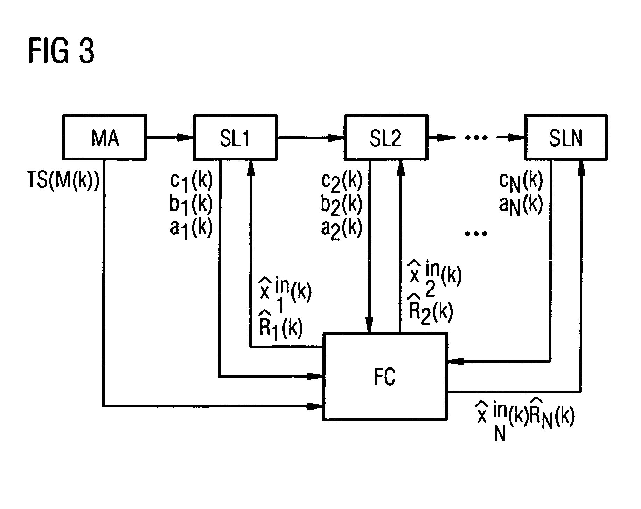

When using a Kalman filter for estimating the variables, the estimation of the state variables is based on estimated variables of all nodes. Hence, when implementing the Kalman filter, the synchronization is done in a common fusion center in which all known variables for the master node MA and all slave nodes SL1 to SLN are collected. This is indicated in the diagram of Fig. 3. According to this diagram, the measured variables $TS(M(k))$ of the master node and the variables $c_n(k)$, $b_n(k)$ and $a_n(k)$ ($n = 1, ..., N$) of the slave nodes are sent from each node to the fusion center FC. In the fusion center, the Kalman filter is applied to the variables resulting in estimated state variables $\hat{x}^{in}_n(k)$, $\hat{R}_n(k)$ ($n = 1, ..., N$), i.e. in an estimation of the master counter value and the RFC value when receiving the synchronization message in a corresponding slave node. Those estimated variables are passed back to the respective slaves which use those variables in order to synchronize their clocks.

In the following, an embodiment for estimating the state variables using the so-called sum-product algorithm will be described on the basis of the above defined state transition and observation model, namely based on the following equations:

$$(2): \quad R_n(k) = R_n(k-1) + \omega_n(k)$$

$$(4): \quad x^{\text{in}}_n(k) = x^{\text{in}}_n(k-1) + a_n(k) \cdot R_n(k-1)$$

$$(14): \quad TS(M(k)) = x^{\text{in}}_1(k) - c_1(k) \cdot R_1(k) + v_1(k)$$

$$(15): \quad x^{\text{in}}_{n-1}(k) + b_{n-1}(k) \cdot R_{n-1}(k) = x^{\text{in}}_n(k) - c_n(k) \cdot R_n(k) + v_n(k) \qquad \text{for } n > 1$$

For more compact notation the two hidden state variables are lumped into one hidden vector-valued variable

$$\mathbf{x}_n(k) = \left[ x^{\text{in}}_n(k), R_n(k) \right]^{\text{T}}, \qquad \text{and} \qquad \text{it} \qquad \text{is} \qquad \text{defined} \qquad \text{accordingly:}$$

$$\mathbf{A}_n(k) = \begin{bmatrix} 1 & a_n(k) \\ 0 & 1 \end{bmatrix}, \quad \mathbf{e} = [0,1]^{\text{T}}, \quad \mathbf{c}_n(k) = [1, -c_n(k)]^{\text{T}},$$

$$\mathbf{b}_n(k) = [1, b_n(k)]^{\text{T}}.$$

Then the state-space equations become:

$$\boxed{\mathbf{x}_n(k) = \mathbf{A}_n(k) \cdot \mathbf{x}_n(k-1) + \omega_n(k) \cdot \mathbf{e}} \qquad (16')$$

$$\boxed{TS(M(k)) = \mathbf{c}_1^{\mathrm{T}}(k) \cdot \mathbf{x}_1(k) + v_1(k)} \qquad (17')$$

$$\boxed{\mathbf{b}_{n-1}^{\mathrm{T}}(k) \cdot \mathbf{x}_{n-1}(k) = \mathbf{c}_n^{\mathrm{T}}(k) \cdot \mathbf{x}_n(k) + v_n(k) \qquad \text{for } n > 1} \qquad (18')$$

The random vectors $\mathbf{x}_n(k)$ and $\mathbf{x}_n(k\text{-}1)$ are related via the probability density function $p_{\omega_n(k)}(\omega_n(k))$ of the noise $\omega_n(k)$; the distribution of $\mathbf{x}_1(k)$ is given by the probability density function $p_{v_1(k)}(v_1(k))$ of the noise $v_1(k)$; and the random vectors $\mathbf{x}_n(k)$ and $\mathbf{x}_{n-1}(k)$ are related via the probability density function $p_{v_n(k)}(v_n(k))$ of the noise $v_n(k)$.

It is assumed that all noises are Gaussian, i.e., for all $n \in \{1,...N\}$, $\omega_n(k) \sim N(0, \sigma_{\omega_n(k)}^2)$ and $v_n(k) \sim N(0, \sigma_{v_n(k)}^2)$. Then

$$p_{\omega_n(k)}(\omega_n(k)) = \frac{1}{\sqrt{2\pi}\sigma_{\omega_n(k)}} \exp\left(-\frac{(\omega_n(k))^2}{2\sigma_{\omega_n(k)}^2}\right) \qquad (19')$$

and since from (16')

$$\omega_n(k) = \mathbf{e}^{\mathrm{T}} \cdot (\mathbf{x}_n(k) - \mathbf{A}_n(k)\mathbf{x}_n(k-1)) \qquad (20')$$

the following function is defined:

$$\boxed{\begin{aligned} f_k^n(\mathbf{x}_n(k) \mid \mathbf{x}_n(k-1)) &= p_{\omega_n(k)}(\omega_n(k)) = p_{\omega_n(k)}(\mathbf{e}^{\mathrm{T}}(\mathbf{x}_n(k) - \mathbf{A}_n(k)\mathbf{x}_n(k-1))) \\ &= \frac{1}{\sqrt{2\pi}\sigma_{\omega_n(k)}} \exp\left(-\frac{(\mathbf{x}_n(k) - \mathbf{A}_n(k)\mathbf{x}_n(k-1))^{\mathrm{T}} \mathbf{e}\mathbf{e}^{\mathrm{T}}(\mathbf{x}_n(k) - \mathbf{A}_n(k)\mathbf{x}_n(k-1))}{2\sigma_{\omega_n(k)}^2}\right) \end{aligned}} \qquad (21')$$

Likewise:

$$p_{v_n(k)}(v_n(k)) = \frac{1}{\sqrt{2\pi}\sigma_{v_n(k)}} \exp\left(-\frac{(v_n(k))^2}{2\sigma_{v_n(k)}^2}\right) \qquad (22')$$

and from (17'), (18')

$$v_1(k) = TS(M(k)) - \mathbf{c}_1^{\mathrm{T}}(k) \cdot \mathbf{x}_1(k) \qquad (23')$$

$$v_n(k) = \mathbf{b}_{n-1}^{\mathrm{T}}(k) \cdot \mathbf{x}_{n-1}(k) - \mathbf{c}_n^{\mathrm{T}}(k) \cdot \mathbf{x}_n(k) \qquad (\text{for } n > 1) \qquad (24')$$

the following functions are defined:

$$\begin{aligned} g_k^1(\mathbf{x}_1(k) \,|\, TS(M(k))) &= p_{v_1(k)}(v_1(k)) = p_{v_1(k)}(TS(M(k)) - \mathbf{c}_1^{\mathrm{T}}(k) \cdot \mathbf{x}_1(k)) \\ &= \frac{1}{\sqrt{2\pi}\,\sigma_{v_1(k)}} \exp\left( -\frac{\left(TS(M(k)) - \mathbf{c}_1^{\mathrm{T}}(k) \cdot \mathbf{x}_1(k)\right)^2}{2\sigma_{v_1(k)}^2} \right) \end{aligned} \qquad (25')$$

and

$$\begin{aligned} g_k^n(\mathbf{x}_n(k) \,|\, \mathbf{x}_{n-1}(k)) &= p_{v_n(k)}(v_n(k)) = p_{v_n(k)}(\mathbf{b}_{n-1}^{\mathrm{T}}(k) \cdot \mathbf{x}_{n-1}(k) - \mathbf{c}_n^{\mathrm{T}}(k) \cdot \mathbf{x}_n(k)) \\ &= \frac{1}{\sqrt{2\pi}\,\sigma_{v_n(k)}} \exp\left( -\frac{\left(\mathbf{b}_{n-1}^{\mathrm{T}}(k) \cdot \mathbf{x}_{n-1}(k) - \mathbf{c}_n^{\mathrm{T}}(k) \cdot \mathbf{x}_n(k)\right)^2}{2\sigma_{v_n(k)}^2} \right) \end{aligned} \qquad (26')$$

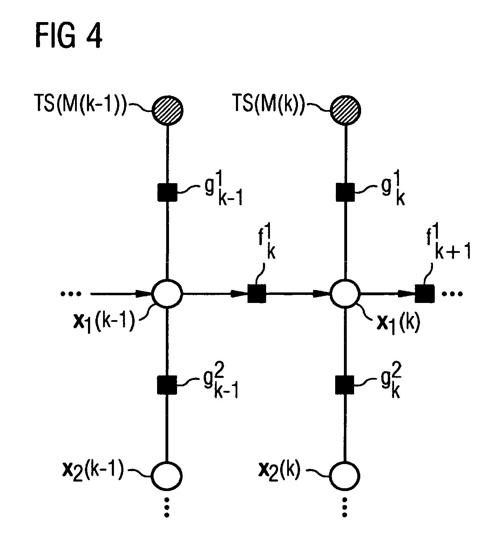

The above dependencies can be described in a factor graph which is shown in Fig. 4. Factor graphs per se are known from the prior art. In the factor graph of Fig. 4 a circle is called a variable node, and represents the variable(s) labelling the circle. Shaded circles are observed variables, while un-shaded ones are hidden variables. A square is a function node which represents a function labelling that square. A node variable is connected to a function node if the corresponding variable is mentioned in the function. The whole graph represents the factorization of a global function.

In the following, the factor graph of Fig. 4 will be used to represent the relationships between the variables based on formulas (21'), (25') and (26'). Generally, a factor graph of a function g can be combined with message passing algorithms, such as the sum-product algorithm, to efficiently compute certain characteristics of g, such as marginals.

In the embodiment described herein, the sum-product algorithm is used to calculate the posterior probability distribution of $\mathbf{x}_n(k)$ given the observation $TS(M(k))$, which is denoted in the following by $q(\mathbf{x}_n(k))$ and defined in (27') below. A MAP (maximum a posteriori) estimation of the hidden state variables contained in vector $\mathbf{x}_n(k)$, can then be obtained from $q(\mathbf{x}_n(k))$.

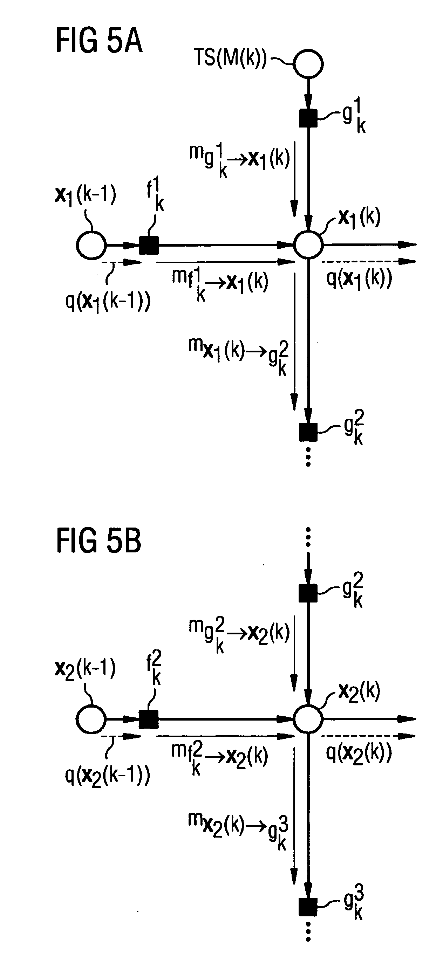

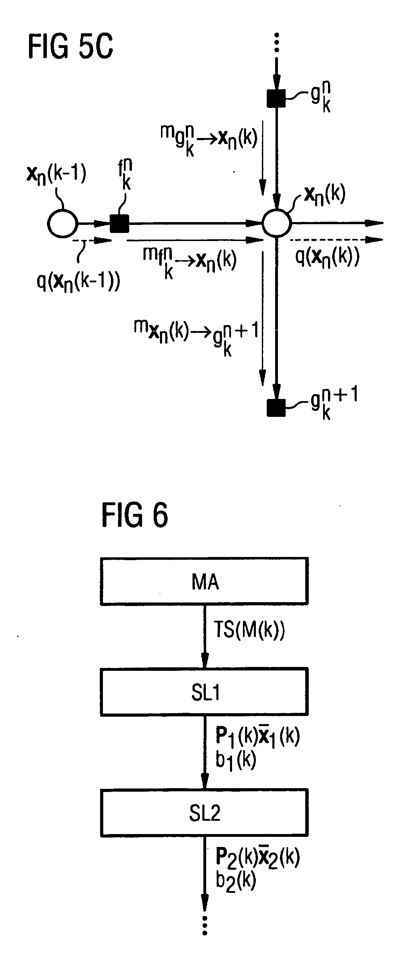

A simplified version of the sum-product algorithm in which messages are only passed in one direction is used in the embodiment described herein. Figs. 5A, 5B and 5C show parts of the corresponding factor graph for this simplified algorithm. Particularly, those figures indicate the message propagation on the graph in the sum-product algorithm. Fig. 5A shows the part of the factor graph for variable $\mathbf{x}_1(k)$, Fig. 5B shows the part of the graph for variable $\mathbf{x}_2(k)$ and Fig. 5C shows in general the part of the graph for variable $\mathbf{x}_n(k)$. In figures 5A to 5C, solid lines represent messages used within a time step, while dashed lines represent messages passed to the next time step (i.e. the next synchronization cycle).

Let $q(\mathbf{x}_n(k))$ denote the posterior probability density function of the state $\mathbf{x}_n(k)$ obtained in the time step $k$ for slave $n$, given the observation $TS(M(k))$. Since all the equations in the state-space model are linear and all the random variables have Gaussian distribution, $q(\mathbf{x}_n(k))$ is also a Gaussian distribution, which is given by:

$$q(\mathbf{x}_n(k)) = \frac{1}{(2\pi)|\mathbf{P}_n(k)|^{1/2}} \exp\left(-\frac{1}{2}(\mathbf{x}_n(k) - \bar{\mathbf{x}}_n(k))^T \mathbf{P}_n(k)^{-1}(\mathbf{x}_n(k) - \bar{\mathbf{x}}_n(k))\right) \quad (27')$$

where $\bar{\mathbf{x}}_n(k) = E\{\mathbf{x}_n(k)\}$ is the mean of Gaussian random variable $\mathbf{x}_n(k)$. $\mathbf{P}_n(k)$ is its covariance matrix, defined as:

$$\mathbf{P}_n(k) = E\left\{(\mathbf{x}_n(k) - \bar{\mathbf{x}}_n(k))(\mathbf{x}_n(k) - \bar{\mathbf{x}}_n(k))^T\right\}.$$

The mean and covariance matrix are initialized with appropriate values. E.g., $E\{R_n(k)\}$ is initialized by 1, $E\{x_n^{in}(k)\}$ is initialized by $TS(M(k)) + \sum_{i=1}^{n} c_i(k) + \sum_{i=1}^{n-1} b_i(k)$ and $\mathbf{P}_n(k)$ is initialized by $N \cdot \sigma_{v_n(k)}^2 \cdot \mathbf{I}_N$ in step 0. The following part derives the transition from step $k$-1 to step $k$.

Using the sum-product algorithm, $q(\mathbf{x}_n(k))$ can be calculated in each time step $k$, for which it is sufficient to calculate the mean and variance. Because $q(\mathbf{x}_n(k))$ is Gaussian, it has its maximum at the mean, hence the MAP estimate of $\mathbf{x}_n(k)$ is: $\hat{\mathbf{x}}_n^{MAP}(k) = \bar{\mathbf{x}}_n(k)$.

The above mentioned Figs. 5A to 5C illustrate the sum-product algorithm. If there is an arrow from node a to node b, then a is a parent of b and b is a child of a. A parent node can pass a "message" to a child node, in the direction indicated by the arrows on the edges. It can be observed in Figs. 5A to 5C that each node has at most one child. The messages are real numbers, and namely the values of certain relevant probability density functions. Let $m_{a \to b}$ denote the message from node *a* to node *b*.

The message calculation at each node is carried out according to the sum-product algorithm as follows:

- A node can calculate the message to its child if it has received messages from all parents.

- The message from function node a to variable node i is given by:

$$m_{a \to i}(y) = \int_{\vec{x}}\left(\prod_{j \in \mathrm{Pa}(a)} m_{j \to a}(x)\right) \cdot f_a(x, y)\, dx \quad (28')$$

where $f_a(x, y)$ is the function represented by node a and Pa($a$) denotes all the parents of a. I.e., all the messages received from the parents are multiplied, then multiplied by the own function, then the desired marginal of this expression is computed (by integration over all other variables).

- The message from a variable node $j$ to a function node a is given by:

$$m_{j \to a}(x_j) = \prod_{b \in \mathrm{Pa}(j)} m_{b \to j}(x_j) = p_j(x_j) \quad (29')$$

i.e. consists of the product of all the messages received from the parents. This message computes the marginal probability density function at every variable node if it has received all messages from its parents.

In (28') and (29'), if incoming messages are Gaussian, then the outgoing message is also Gaussian. The sum-product algorithm will be initialized by Gaussian distributions, so all the messages are Gaussian. $\mu_{a\to b}$ and $\Lambda_{a\to b}$ are used to denote the mean and the variance of message $m_{a\to b}$, see (33').

According to (28'), the message from function node $f_k^n$ to variable node $x_n(k)$ can be calculated as follows (see "left arm" in subgraphs of Fig. 5C):

$$m_{f_k^n\to x_n(k)}(\mathbf{x}_n(k)) = \int_{\mathbf{x}_n(k-1)} q(\mathbf{x}_n(k-1))\cdot f_k^n(\mathbf{x}_n(k)\,|\,\mathbf{x}_n(k-1)) \qquad (30')$$

The expression of $q(\mathbf{x}_n(k-1))$ is given by (27') and the expression of $f_k^n(\mathbf{x}_n(k)\,|\,\mathbf{x}_n(k-1))$ is given by (21'). Calculating the integral in (30') according to the standard multiplication and integration of multivariate Gaussian distribution functions, leads to the result that $m_{f_k^n\to x_n(k)}(\mathbf{x}_n(k))$ is a Gaussian density function, with mean:

$$\mu_{f_k^n\to x_n(k)} = \mathbf{A}_n(k)\cdot \overline{\mathbf{x}}_n(k-1) \qquad (31')$$

and covariance matrix:

$$\Lambda_{f_k^n\to x_n(k)} = \mathbf{A}_n(k)\mathbf{P}_n(k-1)\mathbf{A}_n^{\mathrm{T}}(k) + \mathbf{\Phi}_n(k) \qquad (32')$$

where $\mathbf{\Phi}_n(k) = \begin{bmatrix} 0 & 0 \\ 0 & \sigma^2_{\omega_n(k)} \end{bmatrix}$ .

So $m_{f_k^n\to x_n(k)}(\mathbf{x}_n(k))$ can be expressed as :

$$m_{f_k^n\to x_n(k)}(\mathbf{x}_n(k)) =$$
$$= \frac{1}{2\pi\left|\Lambda_{f_k^n\to x_n(k)}\right|}\exp\left(-\frac{1}{2}\left(\mathbf{x}_n(k)-\mu_{f_k^n\to x_n(k)}\right)^{\mathrm{T}}\Lambda^{-1}_{f_k^n\to x_n(k)}\left(\mathbf{x}_n(k)-\mu_{f_k^n\to x_n(k)}\right)\right) \qquad (33')$$

In the following, the message calculation around node $x_1(k)$ will be described. As shown in Fig. 5A, the message from function node $g_k^1$ to variable node $x_1(k)$, i.e. $m_{g_k^1\to x_1(k)}$, , is only determined by the function $g_k^1$ , , since no message enters this function node. According to the sum-product algorithm, $m_{g_k^1\to x_1(k)}$ is given by:

$$m_{g_k^1 \to \mathbf{x}_1(k)}(\mathbf{x}_1(k)) = g_k^1(\mathbf{x}_1(k)) \qquad (34')$$

As $g_k^1(\mathbf{x}_1(k) \mid TS(M(k)))$ is given by (25'), the expression of $m_{g_k^1 \to \mathbf{x}_1(k)}(\mathbf{x}_1(k))$ is identical to (25'), namely:

$$m_{g_k^1 \to \mathbf{x}_1(k)}^1(\mathbf{x}_1(k)) = \frac{1}{\sqrt{2\pi}\sigma_{v_1(k)}} \exp\left(-\frac{\left(TS(M(k)) - \mathbf{c}_1^{\mathrm{T}}(k) \cdot \mathbf{x}_1(k)\right)^2}{2\sigma_{v_1(k)}^2}\right) \qquad (35')$$

According to Figure 5A, the only incoming messages at variable node $\mathbf{x}_1(k)$ are $m_{f_k^1 \to \mathbf{x}_1(k)}(\mathbf{x}_1(k))$ and $m_{g_k^1 \to \mathbf{x}_1(k)}(\mathbf{x}_1(k))$. Since now they have been calculated in (30') and (34'), and the results are given in (33') and (35'), the estimated marginal $q(\mathbf{x}_1(k))$ according to (29') is calculated as follows:

$$q(\mathbf{x}_1(k)) = m_{g_k^1 \to \mathbf{x}_1(k)}(\mathbf{x}_1(k)) \cdot m_{f_k^1 \to \mathbf{x}_1(k)}(\mathbf{x}_1(k)) \qquad (36')$$

Calculating the product of two Gaussian functions in (36'), it is found out that $q(\mathbf{x}_1(k))$ is also a Gaussian function. Its covariance matrix is:

$$\mathbf{P}_1(k) = \left(\mathbf{c}_1(k)\sigma_{v_1}^{-2}\mathbf{c}_1^{\mathrm{T}}(k) + \Lambda_{f_k^1 \to \mathbf{x}_1(k)}^{-1}\right)^{-1} \qquad (37')$$

and the mean is:

$$\mathbf{x}_1(k) = \mathbf{P}_1(k) \cdot \left(\mathbf{c}_1(k)\sigma_{v_1}^{-2} TS(M(k)) + \Lambda_{f_k^1 \to \mathbf{x}_1(k)}^{-1}\mu_{f_k^1 \to \mathbf{x}_1(k)}\right) \qquad (38')$$

From Figure 5A, it can be seen that the message that variable node $\mathbf{x}_1(k)$ sends to function node $g_k^2$ should be calculated by, according to (29'):

$$m_{\mathbf{x}_1(k) \to g_k^2}(\mathbf{x}_1(k)) = m_{g_k^1 \to \mathbf{x}_1(k)}(\mathbf{x}_1(k)) \cdot m_{f_k^1 \to \mathbf{x}_1(k)}(\mathbf{x}_1(k)) \qquad (39')$$

Comparing (39') and (36'), it can be seen that:

$$m_{\mathbf{x}_1(k)\to g_k^2}(\mathbf{x}_1(k)) = q(\mathbf{x}_1(k)) \qquad (40')$$

So $m_{\mathbf{x}_1(k)\to g_k^2}\left(\mathbf{x}_1(k)\right)$ is also a Gaussian density function. Its mean and covariance matrix are given by:

$$\Lambda_{\mathbf{x}_1(k)\to g_k^2} = \left(\mathbf{c}_1(k)\sigma_{\nu_1}^{-2}\mathbf{c}_1^{\mathsf{T}}(k) + \Lambda_{f_k^1\to\mathbf{x}_1(k)}^{-1}\right)^{-1} \qquad (41')$$

and

$$\mu_{\mathbf{x}_1(k)\to g_k^2} = \Lambda_{\mathbf{x}_1(k)\to g_k^2}\left(\mathbf{c}_1(k)\sigma_{\nu_1}^{-2}TS(M(k)) + \Lambda_{f_k^1\to\mathbf{x}_1(k)}^{-1}\mu_{f_k^1\to\mathbf{x}_1(k)}\right)^{-1} \qquad (42')$$

So $m_{\mathbf{x}_1(k)\to g_k^2}\left(\mathbf{x}_1(k)\right)$ is expressed by:

$$m_{\mathbf{x}_1(k)}\left(\mathbf{x}_1(k)\right) =$$
$$= \frac{1}{2\pi\left|\Lambda_{\mathbf{x}_1(k)\to g_k^2}\right|}\exp\left(-\frac{1}{2}\left(\mathbf{x}_n(k) - \mu_{\mathbf{x}_1(k)\to g_k^2}\right)^T \Lambda_{\mathbf{x}_1(k)\to g_k^2}^{-1}\left(\mathbf{x}_n(k) - \mu_{\mathbf{x}_1(k)\to g_k^2}\right)\right) \qquad (43')$$

Now the message calculation around node $\mathbf{x}_1(k)$ based on Fig. 5A is finished. The calculation generates the marginal probability density $q(\mathbf{x}_1(k))$ and the message goes to node $x_2(k)$, i.e. $m_{\mathbf{x}_1(k)\to g_k^2}\left(\mathbf{x}_1(k)\right)$.

In the following, the message calculation around node $\mathbf{x}_2(k)$ is described. Having received $m_{\mathbf{x}_1(k)\to g_k^2}\left(\mathbf{x}_1(k)\right)$ from $\mathbf{x}_1(k)$, $g_k^2$ can calculate its message to $\mathbf{x}_2(k)$ according to Fig. 5B by using (28') :

$$m_{g_k^2\to\mathbf{x}_2(k)}(\mathbf{x}_2(k)) = \int_{\mathbf{x}_1(k)} m_{\mathbf{x}_1(k)\to g_k^2}(\mathbf{x}_1(k))\cdot g_k^2(\mathbf{x}_2(k)\,|\,\mathbf{x}_1(k)) \qquad (44')$$

where $m_{\mathbf{x}_1(k)\to g_k^2}\left(\mathbf{x}_1(k)\right)$ is given by (43') and $g_k^2(\mathbf{x}_2(k)\,|\,\mathbf{x}_1(k))$ is given by (26'). The result of (44') is given by:

$$m_{g_k^2 \to \mathbf{x}_2(k)}(\mathbf{x}_2(k)) = \alpha \cdot \exp\left(-\frac{\left(\mathbf{c}_2^T(k)\mathbf{x}_2(k) - \mathbf{b}_1^T(k)\mu_{\mathbf{x}_1(k) \to g_k^2}\right)^2}{2\left(\sigma_{\nu_2(k)}^2 + \mathbf{b}_1^T(k)\Lambda_{\mathbf{x}_1(k) \to g_k^2}\mathbf{b}_1(k)\right)}\right) \quad (45')$$

where $\alpha$ is normalization factor, $\mu_{\mathbf{x}_1(k) \to g_k^2}$ is given by (42') and $\Lambda_{\mathbf{x}_1(k) \to g_k^2}$ is given by (41').

According to Figure 5B, the only incoming messages at variable node $\mathbf{x}_2(k)$ are $m_{f_k^2(k) \to \mathbf{x}_2(k)}(\mathbf{x}_2(k))$ and $m_{g_k^2(k) \to \mathbf{x}_2(k)}(\mathbf{x}_2(k))$.

Since now they have been calculated in (30') and (44'), and the results are given in (33') and (45'), the estimated marginal $q(\mathbf{x}_2(k))$ can be calculated according to (29) as follows:

$$q(\mathbf{x}_2(k)) = m_{f_k^2 \to \mathbf{x}_2(k)}(\mathbf{x}_2(k)) \cdot m_{g_k^2 \to \mathbf{x}_2(k)}(\mathbf{x}_2(k)) \quad (46')$$

Inserting (33') and (45') in (46'), the result of $q(\mathbf{x}_2(k))$ is a Gaussian distribution. Its covariance matrix and mean are given by:

$$\mathbf{P}_2(k) = \left(\mathbf{c}_2(k)\left[\sigma_{\nu_2(k)}^2 + \mathbf{b}_1^T(k)\Lambda_{\mathbf{x}_1(k) \to g_k^2}\mathbf{b}_1(k)\right]^{-1}\mathbf{c}_2^T(k) + \Lambda_{f_k^2 \to \mathbf{x}_2(k)}^{-1}\right)^{-1} \quad (47')$$

and

$$\overline{\mathbf{x}}_2(k) = \mathbf{P}_2(k)\left\{ \begin{array}{l} \mathbf{c}_2(k)\left[\sigma_{\nu_2(k)}^2 + \mathbf{b}_1^T(k)\Lambda_{\mathbf{x}_1(k) \to g_k^2}\mathbf{b}_1(k)\right]^{-1}\mathbf{b}_1^T(k)\mu_{\mathbf{x}_1(k) \to g_k^2} \\ + \Lambda_{f_k^2 \to \mathbf{x}_2(k)}^{-1}\mu_{f_k^2 \to \mathbf{x}_2(k)} \end{array} \right\} \quad (48')$$

From Fig. 5B, it can be seen that message $m_{\mathbf{x}_2(k) \to g_k^3}(\mathbf{x}_1(k))$ should be calculated according to (29') by:

$$m_{\mathbf{x}_2(k) \to g_k^3}(\mathbf{x}_1(k)) = m_{f_k^2 \to \mathbf{x}_2(k)}(\mathbf{x}_2(k)) \cdot m_{g_k^2 \to \mathbf{x}_2(k)}(\mathbf{x}_2(k)) \quad (49')$$

where $m_{f_k^2(k) \to \mathbf{x}_2(k)}(\mathbf{x}_2(k))$ is given by (33') and $m_{g_k^2(k) \to \mathbf{x}_2(k)}(\mathbf{x}_2(k))$ is given by (45'). The calculation in (49') results in a Gaussian density function. Its mean $\mu_{x_1(k)\to g_k^2}(x_1(k))$ and covariance matrix $\Lambda_{x_1(k)\to g_k^2}(x_1(k))$ are given by:

$$\Lambda_{x_2(k)\to g_k^3}(x_2(k)) = \left( c_2(k)\left[ \sigma_{v_2(k)}^2 + b_1^T(k)\Lambda_{x_1(k)\to g_k^2}b_1(k) \right]^{-1} c_2^T(k) + \Lambda_{f_k^2\to x_2(k)}^{-1} \right)^{-1} \quad (50')$$

and

$$\mu_{x_2(k)\to g_k^3}(x_2(k)) = \Lambda_{x_2(k)\to g_k^3}(x_2(k)) \left\{ \begin{array}{l} c_2(k)\left[ \sigma_{v_2(k)}^2 + b_1^T(k)\Lambda_{x_1(k)\to g_k^2}b_1(k) \right]^{-1} b_1^T(k)\mu_{x_1(k)\to g_k^2} \\ + \Lambda_{f_k^2\to x_2(k)}^{-1}\mu_{f_k^2\to x_2(k)} \end{array} \right\} \quad (51')$$

$m_{x_2(k)\to g_k^3}(x_2(k))$ is then given by:

$$m_{x_2(k)\to g_k^3}(x_2(k)) =$$

$$= \frac{1}{2\pi\left|\Lambda_{x_2(k)\to g_k^3}\right|}\exp\left( -\frac{1}{2}\left( x_2(k)-\mu_{x_2(k)\to g_k^3} \right)^T \Lambda_{x_2(k)\to g_k^3}^{-1}\left( x_2(k)-\mu_{x_2(k)\to g_k^3} \right) \right) \quad (52')$$

Now the message calculation around node $x_2(k)$ based on Fig. 5B is finished. The calculation generates the marginal probability density $q(x_2(k))$ and the message goes to node $x_2(k)$, i.e. $m_{x_2(k)\to g_k^3}(x_1(k))$.

In the following, the previous derivation is generalized for the calculation of any given node $x_n(k)$. I.e., the message calculation around node $x_n(k)$ given the input $m_{x_{n-1}(k)\to g_k^n}(x_{n-1}(k))$ will be described.

Having received $m_{x_{n-1}(k)\to g_k^n}(x_{n-1}(k))$ from $x_{n-1}(k)$, $g_k^n$ can calculate its message to $x_n(k)$ according to Figure 5C by using (28'):

$$m_{g_k^n\to x_n(k)}(x_n(k)) = \int_{x_{n-1}(k)} m_{x_{n-1}(k)\to g_k^n}(x_{n-1}(k))\cdot g_k^n(x_n(k),x_{n-1}(k))$$

$$m_{g_k^n\to x_n(k)}(x_n(k)) = \int_{x_{n-1}(k)} m_{x_{n-1}(k)\to g_k^n}(x_{n-1}(k))\cdot g_k^n(x_n(k)\,|\,x_{n-1}(k)) \quad (53')$$

where $g_k^n(x_n(k)\,|\,x_{n-1}(k))$ is given by (26') and $m_{x_{n-1}(k)\to g_k^n}(x_{n-1}(k))$ is from the calculation in the previous node, i.e. node $\mathbf{x}_{n-1}(k)$. From the previous derivation it can be seen that $m_{\mathbf{x}_{n-1}(k)\rightarrow g_k^n}\left(\mathbf{x}_{n-1}(k)\right)$ is a Gaussian density function.

Its mean will be denoted by $\boldsymbol{\mu}_{\mathbf{x}_{n-1}(k)\rightarrow g_k^n}$ and its covariance matrix by $\boldsymbol{\Lambda}_{\mathbf{x}_{n-1}(k)\rightarrow g_k^n}$.

As a consequence, the result of (53') is given by:

$$m_{g_k^n\rightarrow\mathbf{x}_n(k)}(\mathbf{x}_n(k)) = \alpha \cdot \exp\left(-\frac{\left(\mathbf{c}_n^{\mathrm{T}}(k)\mathbf{x}_n(k) - \mathbf{b}_{n-1}^{\mathrm{T}}(k)\boldsymbol{\mu}_{\mathbf{x}_{n-1}(k)\rightarrow g_k^n}\right)^2}{2\left(\sigma_{v_n(k)}^2 + \mathbf{b}_{n-1}^{\mathrm{T}}(k)\boldsymbol{\Lambda}_{\mathbf{x}_{n-1}(k)\rightarrow g_k^n}\mathbf{b}_{i-1}(k)\right)}\right) \qquad (54')$$

where $\alpha$ is the normalization factor.
Then each $q(\mathbf{x}_n(k))$ is calculated by:

$$q(\mathbf{x}_n(k)) = m_{f_k^n\rightarrow\mathbf{x}_n(k)}(\mathbf{x}_n(k)) \cdot m_{g_k^n\rightarrow\mathbf{x}_n(k)}(\mathbf{x}_n(k)) \qquad (55')$$

Inserting the result of (30') and (54') into (55'), it can be found out that the covariance matrix of $q(\mathbf{x}_n(k))$ is:

$$\mathbf{P}_n(k) = \left(\mathbf{c}_n(k)\left[\sigma_{v_n(k)}^2 + \mathbf{b}_{n-1}^{\mathrm{T}}(k)\boldsymbol{\Lambda}_{\mathbf{x}_{n-1}(k)\rightarrow g_k^n}\mathbf{b}_{n-1}(k)\right]^{-1}\mathbf{c}_n^{\mathrm{T}}(k) + \boldsymbol{\Lambda}_{f_k^n\rightarrow\mathbf{x}_i(k)}^{-1}\right)^{-1} \qquad (56')$$

The mean of $q(\mathbf{x}_n(k))$ is:

$$\mathbf{x}_n(k) = \mathbf{P}_n(k,k)\left\{\begin{array}{c}\mathbf{c}_n(k)\left[\sigma_{v_n(k)}^2 + \mathbf{b}_{n-1}^{\mathrm{T}}(k)\boldsymbol{\Lambda}_{\mathbf{x}_{n-1}(k)\rightarrow g_k^n}\mathbf{b}_{n-1}(k)\right]^{-1}\mathbf{b}_{n-1}^{\mathrm{T}}(k)\boldsymbol{\mu}_{\mathbf{x}_{n-1}(k)\rightarrow g_k^n} \\ +\boldsymbol{\Lambda}_{f_k^n\rightarrow\mathbf{x}_i(k)}^{-1}\boldsymbol{\mu}_{f_k^n\rightarrow\mathbf{x}_i(k)}\end{array}\right\} \qquad (57')$$

And the message from variable node $\mathbf{x}_n(k)$ to function node $g_k^{n+1}$ is given by:

$$m_{\mathbf{x}_n(k)\rightarrow g_k^{n+1}}(\mathbf{x}_n(k)) = m_{f_k^n\rightarrow\mathbf{x}_n(k)}(\mathbf{x}_n(k)) \cdot m_{g_k^n\rightarrow\mathbf{x}_n(k)}(\mathbf{x}_n(k)) = q^s(\mathbf{x}_n(k)) \qquad (58')$$

So $m_{\mathbf{x}_n(k)\rightarrow g_k^{n+1}}\left(\mathbf{x}_n(k)\right)$ is a Gaussian density function and its mean $\boldsymbol{\mu}_{\mathbf{x}_n(k)\rightarrow g_k^{n+1}}$ and variance $\boldsymbol{\Lambda}_{\mathbf{x}_n(k)\rightarrow g_k^{n+1}}$ are given by:

$$\Lambda_{x_n(k) \to g_k^{n+1}} = \mathbf{P}_n(k) \qquad (59')$$

and

$$\mu_{x_n(k) \to g_k^{n+1}} = \overline{\mathbf{x}}_n(k, k) \qquad (60')$$

Using (53') to (60'), the posterior probability density function for all variable nodes can be calculated.

The advantage of the above described sum-product algorithm in comparison to the Kalman filter lies in the fact that no fusion center is needed for estimating the hidden state variables. This is because the estimated variable $\mathbf{x}_n(k)$, i.e. its mean $\overline{\mathbf{x}}_n(k)$ and its covariance matrix $\mathbf{P}_n(k)$, in a slave node n only depends on variables calculated or measured in the previous slave node n-1, i.e. on the previously estimated hidden state variable $\mathbf{x}_{n-1}(k)$ and on the bridge delay $b_{n-1}(k)$ of the slave node n-1. For the first slave node 1, the estimated hidden state variable only depends on the measured variable $TS(M(k))$. As a consequence, the synchronization messages can pass the relevant variables for calculating the hidden state variables from one node to another. This is illustrated in Fig. 6. In this figure, the relevant information carried from a master node MA to the slave node SL1, from the slave node SL1 to the slave node SL2 and from the slave node SL2 to the next slave node are indicated next to corresponding arrows illustrating the transmission of synchronization messages between the nodes. Evidently, by using such synchronization messages, each node can calculate the hidden state variable by its own and the variables need not be transmitted to a fusion center in which the calculation is done after collecting known variables from all nodes. Hence, when using the sum-product algorithm, the estimation of the hidden state variable can be performed in less time, thus resulting in a faster synchronization of the clocks.

**Claims**

1. A method for clock synchronization in a communication network comprising a plurality of nodes (MA, SL1, SL2), wherein the nodes (MA, SL1, SL2) comprise a master node (MA) and slave nodes (SL1, SL2), wherein the master node (MA) has a master clock generating master counter values based on a master counter with a master frequency and wherein each slave node (SL1, SL2) has a slave clock generating slave counter values based on a slave counter with a corresponding slave frequency, the clock synchronization being performed in successive synchronization cycles, wherein in one synchronization cycle:

   - synchronization messages (SY(k)) are transmitted in a sequence of synchronization messages (SY(k)) from the master node (MA) to a slave node (SL1) and from one slave node (SL1) to another slave node (SL2), wherein a synchronization message (SY(k)) sent from one node (MA, SL1, SL2) to another node (MA, SL1, SL2) includes information based on one or more measured counter values ($TS(M(k))$, $TS(S_1^{in}(k))$, $TS(S_1^{out}(k))$) of the node (MA, SL1, SL2) sending the synchronization message (SY(k));
   - for each slave node (SL1, SL2) the master counter value ($x_1^{in}(k)$, $x_2^{in}(k)$) for a measured slave counter value ($TS(S_1^{in}(k))$, $TS(S_2^{in}(k))$) is estimated by using an estimation method applied to a probabilistic model for state variables of the nodes (MA, SL1, SL2), wherein each slave clock is synchronized based on the estimated master counter value ($x_1^{in}(k)$, $x_2^{in}(k)$), wherein the probabilistic model includes
   - a state transition model describing the dependency of state variables ($x_1^{in}(k)$, $x_2^{in}(k)$, $R_1(k)$, $R_2(k)$) of slave nodes (SL1, SL2) in a synchronization cycle on state variables of slave nodes (SL1, SL2) in the previous synchronization cycle;
   - an observation model describing the dependency of known variables ($TS(M(k))$, $b_n(k)$, $c_n(k)$) of master and slave nodes (MA, SL1, SL2) on state variables ($x_1^{in}(k)$, $x_2^{in}(k)$, $R_1(k)$, $R_2(k)$) of slave nodes (SL1, SL2) ;

   and wherein the state variables ($x_1^{in}(k)$, $x_2^{in}(k)$, $R_1(k)$, $R_2(k)$) of the slave nodes (SL1, SL2) are estimated by the estimation method, **characterized in that** the estimation method is based on the sum-product algorithm applied to a factor graph describing the relationships between known variables ($TS(M(k))$, $b_n(k)$, $c_n(k)$) and state variables ($x_1^{in}(k)$, $x_2^{in}(k)$, $R_1(k)$, $R_2(k)$) based on message flows.

**2.** The method according to claim 1, wherein a synchronization message (SY(k)) sent from the master node (MA) includes the measured master counter value (TS(M(k)) when the synchronization message (SY(k)) is sent from the master node (MA).

**3.** The method according to claim 1 or 2, wherein a synchronization message (SY(k)) sent from a slave node (SL1, SL2) includes an approximate master counter value when the synchronization message (SY(k)) is sent from the slave node (SL1, SL2), said approximate master counter value being derived from measured slave counter values $(TS(S_1^{in}(k)), TS(S_1^{out}(k)))$ of the slave node (SL1, SL2) and from information received in synchronization messages.

**4.** The method according to one of the preceding claims, wherein a synchronization message (SY(k)) sent from a slave node (SL1, SL2) includes a measured bridge delay $(b_1(k), b_2(k))$ between receiving the previous synchronization message and sending the synchronization message (SY(K)) as well as the estimated master counter value $(x_1^{in}(k), x_2^{in}(k))$ for the slave node (SL1, SL2).

**5.** The method according to one of the preceding claims, wherein the probabilistic model incorporates measurement errors with respect to measured counter values $(TS(M(k)), TS(S_1^{in}(k)), TS(S_1^{out}(k)))$ as well as variations of the frequency ratio $((R_1(k), R_2(k))$ between the master clock and each slave clock.

**6.** The method according to one of the preceding claims, wherein the state variables $(x_1^{in}(k), X_2^{in}(k), R_1(k), R_2(k))$ comprise the master counter value $(x_1^{in}(k), x_2^{in}(k))$ and the frequency ratio $(R_1(k), R_2(k))$ between the master frequency and a slave frequency when the synchronization message (SY(k)) is received in a slave node.

**7.** The method according to claim 6, wherein the state transition model is defined as follows:

$$R_n(k) = R_n(k-1) + \omega_n(k)$$

$$x_n^{in}(k) = x_n^{in}(k-1) + a_n(k) \cdot R_n(k-1) ,$$

where n refers to the nth slave node (SL1, SL2) receiving a synchronization message (SY(k)) in the sequence of synchronization messages (SY(k));
where k refers to the kth synchronization cycle;
where $x^{in}_n(k)$ refers to the master counter value at the time of receiving the synchronization message (SY(k)) in the nth slave node (SL1, SL2) in the kth synchronization cycle;
where $R_n(k)$ is the frequency ratio between the master frequency and the slave frequency of the nth slave node (SL1, SL2) in the kth synchronization cycle;
where $\omega_n(k)$ refers to a random variable modelling frequency variations;
where $\alpha_n(k)$ is the time interval measured in slave counter values between receiving the synchronization message (SY(k)) in the nth slave node (SL1, SL2) in the kth synchronization cycle and receiving the corresponding synchronization message (SY(k-1)) in the nth slave node (SL1, SL2) in the (k-1)th synchronization cycle.

**8.** The method according to claim 7, wherein the random variable $\omega_n(k)$ is modelled as a Gaussian distribution.

**9.** The method according to one of the preceding claims, wherein the known variables $(TS(M(k)), b_n(k), c_n(k))$ comprise a separately estimated line delay $(c_n(k))$ in slave counter values between receiving successive synchronization messages (SY(k)) in a slave node (SL1, SL2), a measured bridge delay $(b_n(k))$ in slave counter values between receiving a synchronization message (SY(k)) and sending the next synchronization message in a slave node (SL1, SL2) and the measured master counter value (TS(M(k)) when the master node (MA) sends a synchronization message (SY(k)).

**10.** The method according to claim 9, wherein the observation model is defined as follows:

$$TS(M(k)) = x_1^{in}(k) - c_1(k) \cdot R_1(k) + v_1(k)$$

$$x_{n-1}^{in}(k) + b_{n-1}(k) \cdot R_{n-1}(k) = x_n^{in}(k) - c_n(k) \cdot R_n(k) + v_n(k) \qquad \text{for } n > 1$$

where n refers to the nth slave node (SL1, SL2) receiving a synchronization message (SY(k)) in the sequence of synchronization messages (SY(k));

where k refers to the kth synchronization cycle;

where $TS(M(k))$ refers to the measured master counter value when the master node (MA) sends the synchronization message (SY(k)) in the kth synchronization cycle;

where $x_n^{in}(k)$ refers to the master counter value at the time of receiving the synchronization message in the nth slave node in the kth synchronization cycle;

where $R_n(k)$ is the frequency ratio between the master frequency and the slave frequency of the nth slave node (SL1, SL2) in the kth synchronization cycle;

where $c_n(k)$ refers to the separately estimated line delay in slave counter values between receiving successive synchronization messages (SY(k)) in the nth slave node in the kth synchronization cycle;

where $b_n(k)$ refers to the measured bridge delay in slave counter values between receiving the synchronization message (SY(k)) and sending the next synchronization message (SY(k)) in the nth slave node in the kth synchronization cycle;

where $v_n(k)$ refers to a random variable modelling measurement errors in the nth slave node.

11. The method according to claim 10, wherein the random variable $v_n(k)$ is modelled by a Gaussian distribution, said Gaussian distribution preferably being generated from test sample data.

12. The method according to one of the preceding claims, when dependent on claim 6, wherein the state variables ($x_1^{in}$(k), $x_2^{in}$(k), $R_1$(k), $R_2$(k)) of a slave node (SL1, SL2) are estimated in the slave node (SL1, SL2).

13. The method according to one of the preceding claims, wherein the factor graph has constraints with respect to the message flows such that messages are not passed from a node (MA, SL1, SL2) receiving a synchronising message (SY(k)) to a node from which the synchronising message (SY(k)) is received and such that messages are not passed back in time.

14. The method according to one of the preceding claims, wherein the clock synchronization is based on the standard IEEE 1588.

15. The method according to one of the preceding claims, wherein the nodes (MA, SL1, SL2) communicate with each other based on the PROFINET standard.

16. The method according to one of the preceding claims, wherein the method is used in an industrial automation system.

17. Communication network comprising a plurality of nodes (MA, SL1, SL2), wherein the nodes (MA, SL1, SL2) comprise a master node (MA) and slave nodes (SL1, SL2), wherein the master node (MA) has a master clock generating master counter values based on a master counter with a master frequency and wherein each slave node (SL1, SL2) has a slave clock generating slave counter values based on a slave counter with a corresponding slave frequency, wherein the nodes in the communication network are adapted to perform a clock synchronization in successive synchronization cycles such that in one synchronization cycle:

- synchronization messages (SY(k)) are transmitted in a sequence of synchronization messages (SY(k)) from the master node (MA) to a slave node (SL1) and from one slave node (SL1) to another slave node (SL2), wherein a synchronization message (SY(k)) sent from one node (MA, SL1, SL2) to another node (MA, SL1, SL2) includes information based on one or more measured counter values (TS (M (k)), TS($S_1^{in}$(k)), TS($S_1^{out}$(k))) of the node (MA, SL1, SL2) sending the synchronization message (SY(k));

- for each slave node (SL1, SL2) the master counter value ($x_1^{in}(k)$, $X_2^{in}(k)$) for a measured slave counter value ($TS(S_1^{in}(k))$, $TS(S_2^{in}(k))$) is estimated by using a state estimation method applied to a probabilistic model for state variables of the nodes (MA, SL1, SL2), wherein each slave clock is synchronized based on the estimated master counter value ($x_1^{in}(k)$, $x_2^{in}(k)$), wherein the probabilistic model includes

- a state transition model describing the dependency of state variables ($x_1^{in}(k)$, $x_2^{in}(k)$, $R_1(k)$, $R_2(k)$) of slave nodes (SL1, SL2) in a synchronization cycle on state variables of slave nodes (SL1, SL2) in the previous synchronization cycle;

- an observation model describing the dependency of known variables ($TS(M(k))$, $b_n(k)$, $c_n(k)$) of master and slave nodes (MA, SL1, SL2) on state variables ($x_1^{in}(k)$, $x_2^{in}(k)$, $R_1(k)$, $R_2(k)$) of slave nodes (SL1, SL2) ;

and wherein the state variables ($X_1^{in}(k)$, $x_2^{in}(k)$, $R_1(k)$, $R_2(k)$) of the slave nodes (SL1, SL2) are estimated by the estimation method,
**characterized in that** the estimation method is based on the sum-product algorithm applied to a factor graph describing the relationships between known variables ($TS(M(k))$, $b_n(k)$, $c_n(k)$) and state variables ($x_1^{in}(k)$, $x_2^{in}(k)$, $R_1(k)$, $R_2(k)$) based on message flows.

18. Communication network according to claim 17, which is adapted to perform a method according to one of claims 2 to 16.

**Patentansprüche**

1. Verfahren zur Taktsynchronisierung in einem Kommunikationsnetzwerk, das eine Vielzahl von Knoten (MA, SL1, SL2) umfasst, wobei die Knoten (MA, SL1, SL2) einen Master-Knoten (MA) und Slave-Knoten (SL1, SL2) umfassen, wobei der Master-Knoten (MA) einen Master-Taktgeber aufweist, der Master-Zählerwerte auf der Basis eines Master-Zählers mit einer Master-Frequenz erzeugt, und wobei jeder Slave-Knoten (SL1, SL2) einen Slave-Taktgeber aufweist, der Slave-Zählerwerte auf der Basis eines Slave-Zählers mit einer entsprechenden Slave-Frequenz erzeugt, wobei die Taktsynchronisierung in aufeinanderfolgenden Synchronisierungszyklen durchgeführt wird, wobei in einem Synchronisierungszyklus:

- Synchronisierungsnachrichten (SY(k)) in einer Folge von Synchronisierungsnachrichten (SY(k)) von dem Master-Knoten (MA) zu einem Slave-Knoten (SL1) und von einem Slave-Knoten (SL1) zu einem anderen Slave-Knoten (SL2) übertragen werden, wobei eine Synchronisierungsnachricht (SY(k)), die von einem Knoten (MA, SL1, SL2) zu einem anderen Knoten (MA, SL1, SL2) gesendet wird, Informationen enthält, die auf einem oder mehreren gemessenen Zählerwerten ($TS(M(k))$, $TS(S_1^{in}(k))$, $TS(S_1^{out}(k))$) des die Synchronisierungsnachricht (SY(k)) sendenden Knotens (MA, SL1, SL2) basieren;
- für jeden Slave-Knoten (SL1, SL2) der Master-Zählerwert ($x_1^{in}(k)$, $x_2^{in}(k)$) für einen gemessenen Slave-Zählerwert ($TS(S_1^{in}(k))$, $TS(S_2^{in}(k))$) unter Verwendung eines Schätzverfahrens geschätzt wird, das auf ein stochastisches Modell für Zustandsvariable der Knoten (MA, SL1, SL2) angewendet wird, wobei jeder Slave-Takt auf der Basis des geschätzten Master-Zählerwertes ($x_1^{in}(k)$, $x_2^{in}(k)$) synchronisiert wird, wobei das stochastische Modell enthält
- ein Zustandsübergangsmodell, das die Abhängigkeit von Zustandsvariablen ($x_1^{in}(k)$, $x_2^{in}(k)$, $R_1(k)$, $R_2(k)$) von Slave-Knoten (SL1, SL2) in einem Synchronisierungszyklus von Zustandsvariablen von Slave-Knoten (SL1, SL2) im vorhergehenden Synchronisierungszyklus beschreibt;
- ein Beobachtungsmodell, das die Abhängigkeit bekannter Variabler ($TS(M(k))$, $b_n(k)$, $c_n(k)$) von Master- und Slave-Knoten (MA, SL1, SL2) von Zustandsvariablen ($x_1^{in}(k)$, $x_2^{in}(k)$ $R_1(k)$, $R_2(k)$) von Slave-Knoten (SL1, SL2) beschreibt;

und wobei die Zustandsvariablen ($x_1^{in}(k)$, $x_2^{in}(k)$, $R_1(k)$, $R_2(k)$) der Slave-Knoten (SL1, SL2) durch das Schätzverfahren geschätzt werden,
**dadurch gekennzeichnet, dass** das Schätzverfahren auf dem Summen-Produkt-Algorithmus basiert, der auf einen Faktorgraphen angewendet wird, welcher die Beziehungen zwischen bekannten Variablen ($TS(M(k))$, $b_n(k)$, $c_n(k)$) und Zustandsvariablen ($x_1^{in}(k)$, $x_2^{in}(k)$, $R_1(k)$, $R_2(k)$) auf der Basis von Nachrichtenflüssen beschreibt.

2. Verfahren nach Anspruch 1, wobei eine Synchronisierungsnachricht (SY(k)), die von dem Master-Knoten (MA) gesendet wird, den gemessenen Master-Zählerwert ($TS(M(k))$), wenn die Synchronisierungsnachricht (SY(k)) von dem Master-Knoten (MA) gesendet wird, enthält.

**3.** Verfahren nach Anspruch 1 oder 2, wobei eine Synchronisierungsnachricht (SY(k)), die von einem Slave-Knoten (SL1, SL2) gesendet wird, einen näherungsweisen Master-Zählerwert, wenn die Synchronisierungsnachricht (SY(k)) von dem Slave-Knoten (SL1, SL2) gesendet wird, enthält, wobei der besagte näherungsweise Master-Zählerwert von gemessenen Slave-Zählerwerten ($TS(S_1^{in}(k))$, $TS(S_1^{out}(k))$) des Slave-Knotens (SL1, SL2) und von Informationen, die in Synchronisierungsnachrichten empfangen wurden, abgeleitet wird.

**4.** Verfahren nach einem der vorhergehenden Ansprüche, wobei eine Synchronisierungsnachricht (SY(k)), die von einem Slave-Knoten (SL1, SL2) gesendet wird, eine gemessene Brückenverzögerung (Bridge Delay) ($b_1(k)$, $b_2(k)$) zwischen dem Empfangen der vorhergehenden Synchronisierungsnachricht und dem Senden der Synchronisierungsnachricht (SY(k)) sowie den geschätzten Master-Zählerwert ($x_1^{in}(k)$, $x_2^{in}(k)$) für den Slave-Knoten (SL1, SL2) enthält.

**5.** Verfahren nach einem der vorhergehenden Ansprüche, wobei das stochastische Modell Messfehler in Bezug auf gemessene Zählerwerte ($TS(M(k))$, $TS(S_1^{in}(k))$, $TS(S_1^{out}(k))$) sowie Schwankungen des Frequenzverhältnisses (($R_1(k)$, $R_2(k)$) zwischen dem Master-Takt und jedem Slave-Takt beinhaltet.

**6.** Verfahren nach einem der vorhergehenden Ansprüche, wobei die Zustandsvariablen ($x_1^{in}(k)$, $x_2^{in}(k)$, $R_1(k)$, $R_2(k)$) den Master-Zählerwert ($x_1^{in}(k)$, $x_2^{in}(k)$) und das Frequenzverhältnis ($R_1(k)$, $R_2(k)$) zwischen der Master-Frequenz und einer Slave-Frequenz, wenn die Synchronisierungsnachricht (SY(k)) in einem Slave-Knoten empfangen wird, umfassen.

**7.** Verfahren nach Anspruch 6, wobei das Zustandsübergangsmodell wie folgt definiert ist:

$$R_n(k) = R_n(k-1) + \omega_n(k)$$

$$x_n^{in}(k) = x_n^{in}(k-1) + a_n(k) \cdot R_n(k-1),$$

wobei n auf den n-ten Slave-Knoten (SL1, SL2) verweist, der eine Synchronisierungsnachricht (SY(k)) in der Folge von Synchronisierungsnachrichten (SY(k)) empfängt;
wobei k auf den k-ten Synchronisierungszyklus verweist;

wobei $x_n^{in}(k)$ den Master-Zählerwert zum Zeitpunkt des Empfangens der Synchronisierungsnachricht (SY(k)) im n-ten Slave-Knoten (SL1, SL2) im k-ten Synchronisierungszyklus bezeichnet;
wobei $R_n(k)$ das Frequenzverhältnis zwischen der Master-Frequenz und der Slave-Frequenz des n-ten Slave-Knotens (SL1, SL2) im k-ten Synchronisierungszyklus ist;
wobei $\omega_n(k)$ eine Zufallsvariable bezeichnet, welche Frequenzschwankungen modelliert;
wobei $\alpha_n(k)$ das in Slave-Zählerwerten gemessene Zeitintervall zwischen dem Empfangen der Synchronisierungsnachricht (SY(k)) im n-ten Slave-Knoten (SL1, SL2) im k-ten Synchronisierungszyklus und dem Empfangen der entsprechenden Synchronisierungsnachricht (SY(k-1)) im n-ten Slave-Knoten (SL1, SL2) im (k-1)-ten Synchronisierungszyklus bezeichnet.

**8.** Verfahren nach Anspruch 7, wobei die Zufallsvariable $\omega_n(k)$ als eine Normalverteilung modelliert ist.

**9.** Verfahren nach einem der vorhergehenden Ansprüche, wobei die bekannten Variablen ($TS(M(k))$, $b_n(k)$, $c_n(k)$) eine separat geschätzte Leitungsverzögerung ($c_n(k)$) in Slave-Zählerwerten zwischen dem Empfangen aufeinanderfolgender Synchronisierungsnachrichten (SY(k)) in einem Slave-Knoten (SL1, SL2), eine gemessene Brückenverzögerung ($b_n(k)$) in Slave-Zählerwerten zwischen dem Empfangen einer Synchronisierungsnachricht (SY(k)) und dem Senden der nächsten Synchronisierungsnachricht in einem Slave-Knoten (SL1, SL2) und den gemessenen Master-Zählerwert ($TS(M(k))$), wenn der Master-Knoten (MA) eine Synchronisierungsnachricht (SY(k)) sendet, umfassen.

**10.** Verfahren nach Anspruch 9, wobei das Beobachtungsmodell wie folgt definiert ist:

$$TS(M(k)) = x_1^{\text{in}}(k) - c_1(k) \cdot R_1(k) + v_1(k)$$

$$x_{n-1}^{\text{in}}(k) + b_{n-1}(k) \cdot R_{n-1}(k) = x_n^{\text{in}}(k) - c_n(k) \cdot R_n(k) + v_n(k) \qquad \text{für } n > 1$$

wobei n auf den n-ten Slave-Knoten (SL1, SL2) verweist, der eine Synchronisierungsnachricht (SY(k)) in der Folge von Synchronisierungsnachrichten (SY(k)) empfängt;
wobei k auf den k-ten Synchronisierungszyklus verweist;
wobei *TS(M(k))* den gemessenen Master-Zählerwert, wenn der Master-Knoten (MA) die Synchronisierungsnachricht (SY(k)) im k-ten Synchronisierungszyklus sendet, bezeichnet;

wobei $x_n^{\text{in}}(k)$ den Master-Zählerwert zum Zeitpunkt des Empfangens der Synchronisierungsnachricht im n-ten Slave-Knoten im k-ten Synchronisierungszyklus bezeichnet;
wobei $R_n(k)$ das Frequenzverhältnis zwischen der Master-Frequenz und der Slave-Frequenz des n-ten Slave-Knotens (SL1, SL2) im k-ten Synchronisierungszyklus ist;
wobei $c_n(k)$ die separat geschätzte Leitungsverzögerung in Slave-Zählerwerten zwischen dem Empfangen aufeinanderfolgender Synchronisierungsnachrichten (SY(k)) im n-ten Slave-Knoten im k-ten Synchronisierungszyklus bezeichnet;
wobei $b_n(k)$ die gemessene Brückenverzögerung in Slave-Zählerwerten zwischen dem Empfangen der Synchronisierungsnachricht (SY(k)) und dem Senden der nächsten Synchronisierungsnachricht (SY(k)) im n-ten Slave-Knoten im k-ten Synchronisierungszyklus bezeichnet;
wobei $v_n(k)$ eine Zufallsvariable bezeichnet, welche Messfehler im n-ten Slave-Knoten modelliert.

11. Verfahren nach Anspruch 10, wobei die Zufallsvariable $v_n(k)$ durch eine Normalverteilung modelliert wird, wobei die besagte Normalverteilung vorzugsweise aus Testmusterdaten erzeugt wird.

12. Verfahren nach einem der vorhergehenden Ansprüche, wenn abhängig von Anspruch 6, wobei die Zustandsvariablen $(x_1^{\text{in}}(k), X_2^{\text{in}}(k) R_1(k), R_2(k))$ eines Slave-Knotens (SL1, SL2) in dem Slave-Knoten (SL1, SL2) geschätzt werden.

13. Verfahren nach einem der vorhergehenden Ansprüche, wobei der Faktorgraph Nebenbedingungen in Bezug auf die Nachrichtenflüsse aufweist, derart, dass Nachrichten nicht von einem Knoten (MA, SL1, SL2), der eine Synchronisierungsnachricht (SY(k)) empfängt, zu einem Knoten, von welchem die Synchronisierungsnachricht (SY(k)) empfangen wird, weitergeleitet werden, und derart, dass Nachrichten nicht zurück in die Vergangenheit übertragen werden.

14. Verfahren nach einem der vorhergehenden Ansprüche, wobei die Taktsynchronisierung auf dem Standard IEEE 1588 basiert.

15. Verfahren nach einem der vorhergehenden Ansprüche, wobei die Knoten (MA, SL1, SL2) auf der Basis des PROFINET-Standards miteinander kommunizieren.

16. Verfahren nach einem der vorhergehenden Ansprüche, wobei das Verfahren in einem industriellen Automatisierungssystem angewendet wird.

17. Kommunikationsnetzwerk, das eine Vielzahl von Knoten (MA, SL1, SL2) umfasst, wobei die Knoten (MA, SL1, SL2) einen Master-Knoten (MA) und Slave-Knoten (SL1, SL2) umfassen, wobei der Master-Knoten (MA) einen Master-Taktgeber aufweist, der Master-Zählerwerte auf der Basis eines Master-Zählers mit einer Master-Frequenz erzeugt, und wobei jeder Slave-Knoten (SL1, SL2) einen Slave-Taktgeber aufweist, der Slave-Zählerwerte auf der Basis eines Slave-Zählers mit einer entsprechenden Slave-Frequenz erzeugt, wobei die Knoten in dem Kommunikationsnetzwerk dazu eingerichtet sind, eine Taktsynchronisierung in aufeinanderfolgenden Synchronisierungszyklen durchzuführen, derart, dass in einem Synchronisierungszyklus:

- Synchronisierungsnachrichten (SY(k)) in einer Folge von Synchronisierungsnachrichten (SY(k)) von dem Master-Knoten (MA) zu einem Slave-Knoten (SL1) und von einem Slave-Knoten (SL1) zu einem anderen Slave-Knoten (SL2) übertragen werden, wobei eine Synchronisierungsnachricht (SY(k)), die von einem Knoten (MA, SL1, SL2) zu einem anderen Knoten (MA, SL1, SL2) gesendet wird, Informationen enthält, die auf einem oder mehreren gemessenen Zählerwerten (TS(M(k)), TS($S_1^{in}$(k)), TS($S_1^{out}$(k))) des die Synchronisierungsnachricht (SY(k)) sendenden Knotens (MA, SL1, SL2) basieren;
- für jeden Slave-Knoten (SL1, SL2) der Master-Zählerwert ($x_1^{in}$(k), $x_2^{in}$(k)) für einen gemessenen Slave-Zählerwert (TS($S_1^{in}$(k)), TS($S_2^{in}$(k))) unter Verwendung eines Zustandsschätzverfahrens geschätzt wird, das auf ein stochastisches Modell für Zustandsvariable der Knoten (MA, SL1, SL2) angewendet wird, wobei jeder Slave-Takt auf der Basis des geschätzten Master-Zählerwertes ($x_1^{in}$(k), $x_2^{in}$(k)) synchronisiert wird, wobei das stochastische Modell enthält
- ein Zustandsübergangsmodell, das die Abhängigkeit von Zustandsvariablen ($x_1^{in}$(k), $x_2^{in}$(k), $R_1$(k), $R_2$(k)) von Slave-Knoten (SL1, SL2) in einem Synchronisierungszyklus von Zustandsvariablen von Slave-Knoten (SL1, SL2) im vorhergehenden Synchronisierungszyklus beschreibt;
- ein Beobachtungsmodell, das die Abhängigkeit bekannter Variabler (TS(M(k)), $b_n$(k), $c_n$(k)) von Master- und Slave-Knoten (MA, SL1, SL2) von Zustandsvariablen ($x_1^{in}$(k), $x_2^{in}$(k), $R_1$(k), $R_2$(k)) von Slave-Knoten (SL1, SL2) beschreibt;

und wobei die Zustandsvariablen ($x_1^{in}$(k), $x_2^{in}$(k), $R_1$(k), $R_2$(k)) der Slave-Knoten (SL1, SL2) durch das Schätzverfahren geschätzt werden, **dadurch gekennzeichnet, dass** das Schätzverfahren auf dem Summen-Produkt-Algorithmus basiert, der auf einen Faktorgraphen angewendet wird, welcher die Beziehungen zwischen bekannten Variablen (TS(M(k)), $b_n$(k), $c_n$(k)) und Zustandsvariablen ($x_1^{in}$(k), $x_2^{in}$(k), $R_1$(k), $R_2$(k)) auf der Basis von Nachrichtenflüssen beschreibt.

**18.** Kommunikationsnetzwerk nach Anspruch 17, welches dazu eingerichtet ist, ein Verfahren nach einem der Ansprüche 2 bis 16 auszuführen.


**Revendications**

**1.** Procédé de synchronisation d'horloge dans un réseau de communication comprenant une pluralité de noeuds (MA, SL1, SL2), dans lequel les noeuds (MA, SL1, SL2) comprennent un noeud maître (MA) et des noeuds esclaves (SL1, SL2), dans lequel le noeud maître (MA) a une horloge maître générant des valeurs de compteur maître sur la base d'un compteur maître avec une fréquence maître et dans lequel chaque noeud esclave (SL1, SL2) a une horloge esclave générant des valeurs de compteur esclave sur la base d'un compteur esclave avec une fréquence esclave correspondante, la synchronisation d'horloge étant effectuée par cycles de synchronisation successifs, dans lequel, dans un cycle de synchronisation :

- des messages de synchronisation (SY(k)) sont transmis dans une séquence de messages de synchronisation (SY(k)) du noeud maître (MA) à un noeud esclave (SL1) et d'un noeud esclave (SL1) à un autre noeud esclave (SL2), dans lequel un message de synchronisation (SY(k)) envoyé d'un noeud (MA, SL1, SL2) à un autre noeud (MA, SL1, SL2) inclut une information basée sur une ou plusieurs valeur(s) de compteur mesurée (s) (TS(M(k)), TS($S_1^{in}$(k)), TS($S_1^{out}$(k))) du noeud (MA, SL1, SL2) envoyant le message de synchronisation (SY(k)) ;
- pour chaque noeud esclave (SL1, SL2), la valeur de compteur maître ($x_1^{in}$(k), $x_2^{in}$(k)) pour une valeur de compteur esclave mesurée (TS($S_1^{in}$(k)), TS($S_2^{in}$(k))) est estimée en utilisant une méthode d'estimation appliquée à un modèle probabiliste pour des variables d'état des noeuds (MA, SL1, SL2), dans lequel chaque horloge esclave est synchronisée sur la base de la valeur de compteur maître estimée ($x_1^{in}$(k), $x_2^{in}$(k)), dans lequel le modèle probabiliste inclut
- un modèle de transition d'état décrivant la dépendance de variables d'état ($x_1^{in}$(k), $x_2^{in}$ (k) $R_1$(k), $R_2$(k)) de noeuds esclaves (SL1, SL2) dans un cycle de synchronisation à des variables d'état de noeuds esclaves (SL1, SL2) dans le cycle de synchronisation précédent ;
- un modèle d'observation décrivant la dépendance de variables connues (TS(M(k)), $b_n$(k), $C_n$(k)) de noeuds maître et esclaves (MA, SL1, SL2) à des variables d'état ($x_1^{in}$(k) $x_2^{in}$(k), $R_1$(k), $R_2$(k)) de noeuds esclaves (SL1, SL2) ;

et dans lequel les variables d'état ($x_1^{in}$(k), $x_2^{in}$(k), $R_1$(k), $R_2$(k)) des noeuds esclaves (SL1, SL2) sont estimées par la méthode d'estimation, **caractérisé en ce que** la méthode d'estimation est basée sur l'algorithme somme-produit appliqué à un graphe de facteurs décrivant les relations entre des variables connues (TS(M(k)), $b_n(k)$, $C_n(k)$) et des variables d'état ($x_1^{in}(k)$, $x_2^{in}(k)$ $R_1(k)$, $R_2(k)$) sur la base de flux de messages.

2. Procédé selon la revendication 1, dans lequel un message de synchronisation (SY(k)) envoyé du noeud maître (MA) inclut la valeur de compteur maître mesurée (TS(M(k))) lorsque le message de synchronisation (SY(k)) est envoyé du noeud maître (MA).

3. Procédé selon la revendication 1 ou 2, dans lequel un message de synchronisation (SY(k)) envoyé d'un noeud esclave (SL1, SL2) inclut une valeur de compteur maître approximative lorsque le message de synchronisation (SY(k)) est envoyé du noeud esclave (SL1, SL2), ladite valeur de compteur maître approximative étant dérivée de valeurs de compteur esclave mesurées (TS($S_1^{in}(k)$), TS($S_1^{out}(k)$)) du noeud esclave (SL1, SL2) et d'une information reçue dans des messages de synchronisation.

4. Procédé selon l'une des revendications précédentes, dans lequel un message de synchronisation (SY(k)) envoyé d'un noeud esclave (SL1, SL2) inclut un retard de pont mesuré ($b_1(k)$, $b_2(k)$) entre la réception du message de synchronisation précédent et l'envoi du message de synchronisation (SY(k)) ainsi que la valeur de compteur maître estimée ($x_1^{in}(k)$, $x_2^{in}(k)$) pour le noeud esclave (SL1, SL2).

5. Procédé selon l'une des revendications précédentes, dans lequel le modèle probabiliste incorpore des erreurs de mesure pour ce qui concerne des valeurs de compteur mesurées (TS(M(k)), TS($S_1^{in}(k)$), TS($S_1^{out}(k)$)) ainsi que des variations du rapport fréquentiel ($R_1(k)$, $R_2(k)$) entre l'horloge maître et chaque horloge esclave.

6. Procédé selon l'une des revendications précédentes, dans lequel les variables d'état ($x_1^{in}(k)$, $x_2^{in}(k)$, $R_1(k)$, $R_2(k)$) comprennent la valeur de compteur maître ($x_1^{in}(k)$, $x_2^{in}(k)$) et le rapport fréquentiel ($R_1(k)$, $R_2(k)$) entre la fréquence maître et une fréquence esclave lorsque le message de synchronisation (SY(k)) est reçu dans un noeud esclave.

7. Procédé selon la revendication 6, dans lequel le modèle de transition d'état est défini comme suit :

$$R_n(k) = R_n(k-1) + \omega_n(k)$$

$$x_n^{in}(k) = x_n^{in}(k-1) + a_n(k) \cdot R_n(k-1) \ ,$$

où n renvoie au n$^{ème}$ noeud esclave (SL1, SL2) recevant un message de synchronisation (SY(k)) dans la séquence de messages de synchronisation (SY(k)) ;
où k renvoie au k$^{ème}$ cycle de synchronisation ;

où $x_n^{in}(k)$ renvoie à la valeur de compteur maître au moment de la réception du message de synchronisation (SY(k)) dans le n$^{ème}$ noeud esclave (SL1, SL2) dans le k$^{ème}$ cycle de synchronisation ;
où $R_n(k)$ est le rapport fréquentiel entre la fréquence maître et la fréquence esclave du n$^{ème}$ noeud esclave (SL1, SL2) dans le k$^{ème}$ cycle de synchronisation ;
où $\omega_n(k)$ renvoie à une variable aléatoire modélisant des variations fréquentielles ;
où $a_n(k)$ est l'intervalle de temps mesuré dans des valeurs de compteur esclave entre la réception du message de synchronisation (SY(k)) dans le n$^{ème}$ noeud esclave (SL1, SL2) dans le k$^{ème}$ cycle de synchronisation et la réception du message de synchronisation (SY(k-1)) correspondant dans le n$^{ème}$ noeud esclave (SL1, SL2) dans le (k-1)$^{ème}$ cycle de synchronisation.

8. Procédé selon la revendication 7, dans lequel la variable aléatoire $\omega_n(k)$ est modélisée comme une distribution gaussienne.

9. Procédé selon l'une des revendications précédentes, dans lequel les variables connues (TS(M(k)), $b_n(k)$, $c_n(k)$)

comprennent un retard de ligne ($c_n(k)$) estimé séparément dans des valeurs de compteur esclave entre la réception de messages de synchronisation (SY(k)) successifs dans un noeud esclave (SL1, SL2), un retard de pont ($b_n(k)$) mesuré dans des valeurs de compteur esclave entre la réception d'un message de synchronisation (SY(k)) et l'envoi du message de synchronisation suivant dans un noeud esclave (SL1, SL2) et la valeur de compteur maître mesurée (TS(M(k))) lorsque le noeud maître (MA) envoie un message de synchronisation (SY(k)).

**10.** Procédé selon la revendication 9, dans lequel le modèle d'observation est défini comme suit :

$$TS(M(k)) = x_1^{in}(k) - c_1(k) \cdot R_1(k) + v_1(k)$$

$$x_{n-1}^{in}(k) + b_{n-1}(k) \cdot R_{n-1}(k) = x_n^{in}(k) - c_n(k) \cdot R_n(k) + v_n(k) \qquad \text{pour } n > 1$$

où n renvoie au $n^{\text{ème}}$ noeud esclave (SL1, SL2) recevant un message de synchronisation (SY(k)) dans la séquence de messages de synchronisation (SY(k)) ;

où k renvoie au $k^{\text{ème}}$ cycle de synchronisation ;

où $TS(M(k))$ renvoie à la valeur de compteur maître mesurée lorsque le noeud maître (MA) envoie le message de synchronisation (SY(k)) dans le $k^{\text{ème}}$ cycle de synchronisation ;

où $x_n^{in}(k)$ renvoie à la valeur de compteur maître au moment de la réception du message de synchronisation dans le $n^{\text{ème}}$ noeud esclave dans le $k^{\text{ème}}$ cycle de synchronisation ;

où $R_n(k)$ est le rapport fréquentiel entre la fréquence maître et la fréquence esclave du $n^{\text{ème}}$ noeud esclave (SL1, SL2) dans le $k^{\text{ème}}$ cycle de synchronisation ;

où $c_n(k)$ renvoie au retard de ligne estimé séparément dans des valeurs de compteur esclave entre la réception de messages de synchronisation (SY(k)) successifs dans le $n^{\text{ème}}$ noeud esclave dans le $k^{\text{ème}}$ cycle de synchronisation ;

où $b_n(k)$ renvoie au retard de pont mesuré dans des valeurs de compteur esclave entre la réception du message de synchronisation (SY(k)) et l'envoi du message de synchronisation (SY(k)) suivant dans le $n^{\text{ème}}$ noeud esclave dans le $k^{\text{ème}}$ cycle de synchronisation ;

où $v_n(k)$ renvoie à une variable aléatoire modélisant des erreurs de mesure dans le $n^{\text{ème}}$ noeud esclave.

**11.** Procédé selon la revendication 10, dans lequel la variable aléatoire $v_n(k)$ est modélisée par une distribution gaussienne, ladite distribution gaussienne étant préférablement générée à partir de données d'échantillons de test.

**12.** Procédé selon l'une des revendications précédentes, lorsqu'elle dépend de la revendication 6, dans lequel les variables d'état ($x_1^{in}$ (k) $x_2^{in}$ (k) $R_1$ (k) , $R_2$ (k) ) d'un noeud esclave (SL1, SL2) sont estimées dans le noeud esclave (SL1, SL2) .

**13.** Procédé selon l'une des revendications précédentes, dans lequel le graphe de facteurs a des contraintes pour ce qui concerne les flux de messages telles que des messages ne sont pas passés d'un noeud (MA, SL1, SL2) recevant un message de synchronisation (SY(k)) à un noeud duquel le message de synchronisation (SY(k)) est reçu et telles que des messages ne sont pas renvoyés dans le temps.

**14.** Procédé selon l'une des revendications précédentes, dans lequel la synchronisation d'horloge est basée sur la norme IEEE 1588.

**15.** Procédé selon l'une des revendications précédentes, dans lequel les noeuds (MA, SL1, SL2) communiquent les uns avec les autres sur la base de la norme PROFINET.

**16.** Procédé selon l'une des revendications précédentes, dans lequel le procédé est utilisé dans un système d'automatisation industrielle.

17. Réseau de communication comprenant une pluralité de noeuds (MA, SL1, SL2), dans lequel les noeuds (MA, SL1, SL2) comprennent un noeud maître (MA) et des noeuds esclaves (SL1, SL2), dans lequel le noeud maître (MA) a une horloge maître générant des valeurs de compteur maître sur la base d'un compteur maître avec une fréquence maître et dans lequel chaque noeud esclave (SL1, SL2) a une horloge esclave générant des valeurs de compteur esclave sur la base d'un compteur esclave avec une fréquence esclave correspondante, dans lequel les noeuds dans le réseau de communication sont adaptés à effectuer une synchronisation d'horloge par cycles de synchronisation successifs, de telle sorte que dans un cycle de synchronisation :

- des messages de synchronisation (SY(k)) sont transmis dans une séquence de messages de synchronisation (SY(k)) du noeud maître (MA) à un noeud esclave (SL1) et d'un noeud esclave (SL1) à un autre noeud esclave (SL2), dans lequel un message de synchronisation (SY(k)) envoyé d'un noeud (MA, SL1, SL2) à un autre noeud (MA, SL1, SL2) inclut une information basée sur une ou plusieurs valeur(s) de compteur mesurée (s) (TS(M(k)), TS($S_1^{in}$(k)), TS($S_1^{out}$(k))) du noeud (MA, SL1, SL2) envoyant le message de synchronisation (SY(k)) ;
- pour chaque noeud esclave (SL1, SL2), la valeur de compteur maître ($x_1^{in}$(k), $x_2^{in}$(k)) pour une valeur de compteur esclave mesurée (TS($S_1^{in}$(k)), TS($S_2^{in}$(k))) est estimée en utilisant une méthode d'estimation d'état appliquée à un modèle probabiliste pour des variables d'état des noeuds (MA, SL1, SL2), dans lequel chaque horloge esclave est synchronisée sur la base de la valeur de compteur maître estimée ($x_1^{in}$(k), $x_2^{in}$(k)) dans lequel le modèle probabiliste inclut
- un modèle de transition d'état décrivant la dépendance de variables d'état ($x_1^{in}$(k), $x_2^{in}$(k), $R_1$(k), $R_2$(k)) de noeuds esclaves (SL1, SL2) dans un cycle de synchronisation à des variables d'état de noeuds esclaves (SL1, SL2) dans le cycle de synchronisation précédent ;
- un modèle d'observation décrivant la dépendance de variables connues (TS(M(k)), $b_n$(k), $c_n$(k)) de noeuds maître et esclaves (MA, SL1, SL2) à des variables d'état ($x_1^{in}$(k), $x_2^{in}$(k) $R_1$(k), $R_2$(k)) de noeuds esclaves (SL1, SL2) ;

et dans lequel les variables d'état ($x_1^{in}$(k), $x_2^{in}$(k), $R_1$(k), $R_2$(k)) des noeuds esclaves (SL1, SL2) sont estimées par la méthode d'estimation, **caractérisé en ce que** la méthode d'estimation est basée sur l'algorithme somme-produit appliqué à un graphe de facteurs décrivant les relations entre des variables connues (TS(M(k)), $b_n$(k), $C_n$(k)) et des variables d'état ($x_1^{in}$(k), $x_2^{in}$(k), $R_1$(k), $R_2$(k)) sur la base de flux de messages.

18. Réseau de communication selon la revendication 17, qui est adapté à mettre en oeuvre un procédé selon l'une des revendications 2 à 16.

# FIG 1

MA     SL1     SL2

SY(K)     SY(K)   ...

# FIG 2

MA     SL1     SL2

TS(M(K))

M(k)

SY(k)

$M_1^{in}(k)$

$x_1^{in}(k)$

$S_1^{in}(k)$

$M_1^{out}(k)$

$S_1^{out}(k)$

$TS(S_1^{in}(k))$

$x_1^{out}(k)$

$TS(S_1^{out}(k))$

SY(k)

$M_2^{in}(k)$

$S_2^{in}(k)$

$x_2^{in}(k)$

$TS(S_2^{in}(k))$

## FIG 3

TS(M(k))

$c_1(k)$
$b_1(k)$
$a_1(k)$

$c_2(k)$
$b_2(k)$
$a_2(k)$

$c_N(k)$
$a_N(k)$

$\widehat{x}_1^{in}(k)$
$\widehat{R}_1(k)$

$\widehat{x}_2^{in}(k)$
$\widehat{R}_2(k)$

MA  SL1  SL2  SLN

FC

$\widehat{x}_N^{in}(k)\widehat{R}_N(k)$

# FIG 4

TS(M(k-1))

TS(M(k))

$g^1_{k-1}$

$g^1_k$

$f^1_k$

$f^1_{k+1}$

$\mathbf{x}_1(k-1)$

$\mathbf{x}_1(k)$

$g^2_{k-1}$

$g^2_k$

$\mathbf{x}_2(k-1)$

$\mathbf{x}_2(k)$

## FIG 5A

$TS(M(k))$

$g_k^1$

$m_{g_k^1 \rightarrow \mathbf{x}_1(k)}$

$\mathbf{x}_1(k-1)$  $f_k^1$

$\mathbf{x}_1(k)$

$m_{f_k^1 \rightarrow \mathbf{x}_1(k)}$  $q(\mathbf{x}_1(k))$

$q(\mathbf{x}_1(k-1))$

$m_{\mathbf{x}_1(k) \rightarrow g_k^2}$

$g_k^2$

## FIG 5B

$g_k^2$

$m_{g_k^2 \rightarrow \mathbf{x}_2(k)}$

$\mathbf{x}_2(k-1)$  $f_k^2$

$\mathbf{x}_2(k)$

$m_{f_k^2 \rightarrow \mathbf{x}_2(k)}$  $q(\mathbf{x}_2(k))$

$q(\mathbf{x}_2(k-1))$

$m_{\mathbf{x}_2(k) \rightarrow g_k^3}$

$g_k^3$

# FIG 5C

# FIG 6

**REFERENCES CITED IN THE DESCRIPTION**

**Non-patent literature cited in the description**

- **CHONGNING NA.** Probabilistic Model For Clock Synchronization Of Cascaded Network Elements. *I2MTC,* 2009

- **FRANK R. KSCHISCHANG.** Factor Graphs and the Sum-Product Algorithm. *IEEE Transactions on information theory,* February 2001, vol. 47 (2